(19) **Europäisches Patentamt / European Patent Office / Office européen des brevets**

(11) **EP 4 632 354 A1**

(12) **EUROPEAN PATENT APPLICATION**
published in accordance with Art. 153(4) EPC

(43) Date of publication:
**15.10.2025 Bulletin 2025/42**

(21) Application number: **23922914.9**

(22) Date of filing: **11.12.2023**

(51) International Patent Classification (IPC):
**G01N 21/45** (2006.01)    **G02B 21/00** (2006.01)
**G02B 21/14** (2006.01)

(52) Cooperative Patent Classification (CPC):
**G01N 21/17; G01N 21/45; G02B 21/00; G02B 21/14**

(86) International application number:
**PCT/JP2023/044281**

(87) International publication number:
**WO 2024/171581 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.02.2023 JP 2023023356**

(71) Applicant: **Hamamatsu Photonics K.K.**
**Hamamatsu-shi, Shizuoka 435-8558 (JP)**

(72) Inventors:
- **YASUHIKO, Osamu**
  **Hamamatsu-shi, Shizuoka 435-8558 (JP)**
- **TAKEUCHI, Kozo**
  **Hamamatsu-shi, Shizuoka 435-8558 (JP)**

(74) Representative: **Hoffmann Eitle**
**Patent- und Rechtsanwälte PartmbB**
**Arabellastraße 30**
**81925 München (DE)**

(54) **OBSERVATION DEVICE AND OBSERVATION METHOD**

(57) An observation apparatus 1A includes a light source 11, a mirror 22, a condenser lens 24, an objective lens 25, a beam splitter 41, an imaging unit 43, and an analysis unit 50. The analysis unit 50 irradiates an observation object S with light along each of a plurality of light irradiation directions by changing an orientation of a reflection surface of the mirror 22, acquires an interference intensity image at a reference position for each of the plurality of light irradiation directions from the imaging unit 43, and obtains a phase differential image of the observation object by performing predetermined processing based on the acquired interference intensity images. Thus, an observation apparatus capable of reducing influence of multiple scattered light and observing an observation object without staining the observation object even in the case in which the observation object is a multiple scattering object is realized.

**Fig.1**

EP 4 632 354 A1

## Description

### Technical Field

The present disclosure relates to an observation apparatus and an observation method.

### Background Art

In recent years, a technique for producing a three-dimensional cell tissue called a spheroid or an organoid has been developed. Further, a study for applying the above three-dimensional cell tissues to drug development, regenerative medicine, and the like has been developed. The above three-dimensional cell tissue is an optically transparent multiple scattering object. As a technique for imaging the optically transparent scattering object, various methods have been proposed.

In these techniques, examples of an imaging technique using a fluorescent probe include a confocal microscope, a multiphoton microscope, and a light sheet microscope.

The multiphoton microscope is a microscope capable of reducing influence of multiple scattering or aberration by irradiating an observation object with excitation light having a wavelength which is an integer multiple of a wavelength of light which can excite the fluorescent probe, and has a high degree of depth, and thus, it is preferable in this respect. However, it is necessary to label the observation object with the fluorescent probe, and thus, it is not preferable in this respect.

In addition, as a non-staining and non-invasive imaging technique without using the fluorescent probe, optical coherence tomography (OCT) or the like is known.

The non-staining and non-invasive imaging is often desired for an observation object such as the spheroid or the organoid, however, there are not many reports in which the OCT has been applied to the imaging of the above observation object. The reason may be that a resolution of the imaging by the OCT is low, and it is difficult to interpret a signal obtained by the imaging by the OCT. Therefore, it can be said that the non-staining imaging technique for the three-dimensional cell tissue which can be a gold standard has not been established at the present stage.

A quantitative phase imaging (QPI) is also known as a technique capable of imaging an optical path length of the observation object in a non-staining and non-invasive manner. The QPI can acquire physical information such as the optical path length of the observation object (for example, a cell), and thus, application of the QPI is progressing in a biological field. Images acquired by the QPI can be used to generate other types of images, such as a differential interference image and a phase contrast microscope image.

The QPI is a technique capable of acquiring an image having a relatively large amount of information, and is expected to be applicable to a higher content analysis than a conventional analysis using a bright field image. Further, the high content analysis using the non-staining imaging technique has been actively studied due to improvement in image recognition accuracy by machine learning in recent years, and the non-staining imaging of the multiple scattering object is expected to play an important role in the future. However, the QPI cannot grasp a true three-dimensional structure because the acquired image is merely a two-dimensional projection of the optical path length.

Further, optical diffraction tomography (ODT) described in Patent Document 1 is also known as a technique capable of imaging the optical path length of the observation object in a non-staining and non-invasive manner. The ODT is a development of the QPI into a technique capable of three-dimensional imaging, and can realize three-dimensional refractive index tomography of the observation object.

Performing cell observation using the ODT enables identification of organelles such as cell nuclei and mitochondria, and further, enables tracking of three-dimensional structural changes, and is expected to enable higher content analysis than the QPI.

### Citation List

### Patent Literature

Patent Document 1: Japanese Patent Application Laid-Open Publication No. 2017-219826

### Non Patent Literature

Non Patent Document 1: Pritam Pai et al., "Optical transmission matrix measurement sampled on a dense hexagonal lattice", OSA Continuum, Vol.3, No.3, pp.637-648, 2020

Non Patent Document 2: Duygu Akbulut et al., "Optical transmission matrix as a probe of the photonic strength", PHYSICAL REVIEW A 94, 043817, pp.043817-1-043817-8, 2016

Non Patent Document 3: Elbert G. van Putten et al., "The information age in optics: Measuring the transmission matrix", Physics 3, 22, 2010, <URL:https://physics.aps.org/articles/v3/22?referer=apshome>

## Summary of Invention

### Technical Problem

However, although the conventional ODT can be applied to the observation of several cells, it is difficult to apply the ODT to the observation of the multiple scattering object such as the three-dimensional cell tissue described above. This is because, in the conventional ODT, when a large amount of multiple scattered light occurs in the observation object, influence of the multiple scattered light significantly appears in the acquired image.

Light scattering refers to a phenomenon in which light interacts with an object to change a traveling direction of the light. In particular, when spatial non-uniformity of a refractive index in the object increases, the light interacts with the object many times in passing through the object. The light which interacts with the object many times as described above is referred to as the multiple scattered light. On the other hand, the light which interacts with the object only once is referred to as single scattered light. It is known that the multiple scattered light causes an increase in speckle and a deterioration in single-scattering to multi-scattering ratio (SMR), and thus, becomes a barrier for performing the measurement.

The speckle is generated by a large change in intensity or phase caused spatially by interference of the multiple scattered light when the light is temporally and spatially coherent. In order to suppress speckle generation, a light source which outputs temporally or spatially incoherent light may be used. For example, a general bright field microscope such as a phase contrast microscope acquires an image without speckles by using a spatially and temporally incoherent light source such as a halogen lamp, a light emitting diode, or the like.

The deterioration of the SMR is caused by that the multiple scattered light becomes dominant over the single scattered light, and the single scattered light is buried in the multiple scattered light. As the observation object becomes larger and an observation depth becomes deeper, a component of the single scattered light exponentially decreases, whereas a component of the multiple scattered light increases.

A scattering direction of the single scattered light has a direct correspondence relationship with a structure of the object, and thus, it is easily used to measure the structure of the object. On the other hand, the relationship between the multiple scattered light and the structure of the object is complex, and it is difficult to extract information on the structure of the object. Therefore, in the imaging technique using the single scattered light, it is known that the measurement fails when the single scattered light is buried in the multiple scattered light (that is, when the SMR deteriorates).

The suppression of the SMR deterioration is possible by a technique called gating for selectively detecting the single scattered light out of the single scattered light and the multiple scattered light. The multiple scattered light is suppressed by the gating, and thus, the speckles can be suppressed at the same time as the SMR deterioration is suppressed. The gating is achieved using degrees of freedom such as space, time, and polarization. The confocal microscope is an example of the spatial gating. The OCT is an example of the temporal and spatial gating.

The conventional ODT does not remove the influence of the multiple scattered light, and thus, the speckle increases in the acquired image and the SMR deteriorates, when the multiple scattered light generated in the observation object is large. Therefore, although the conventional ODT can be applied to the observation of several cells in which the occurrence of the multiple scattered light is small, it is difficult to apply the ODT to the observation of the multiple scattering object such as the three-dimensional cell tissue in which the occurrence of the multiple scattered light is large.

An object of an embodiment is to provide an observation apparatus and an observation method capable of observing an observation object without staining the observation object while reducing influence of multiple scattered light even in the case in which the observation object is a multiple scattering object.

### Solution to Problem

An embodiment is an observation apparatus. The observation apparatus includes (1) an interference intensity image acquisition unit for acquiring an interference intensity image of an observation object irradiated with light along each of a plurality of light irradiation directions; (2) a complex amplitude image generation unit for generating a complex amplitude image based on the interference intensity image for each of the plurality of light irradiation directions; (3) a transmission matrix generation unit for generating, based on the complex amplitude image of each of the plurality of light irradiation directions, a transmission matrix $T_{rr}(r_{out}; r_{in})$ which relates a wavefront of light at each position $r_{in}$ on a first plane in a case in which the observation object is not present to a wavefront of light at each position $r_{out}$ on a second plane, which is the same as the first plane, in a case in which the observation object is present; (4) a complex differential interference image generation unit for generating, based on the transmission matrix $T_{rr}(r_{out}; r_{in})$, a complex differential interference image by generating C($r_{out}$; $r_{in}$), which is an element-wise product of $T_{rr}$($r_{out}$; $r_{in}$) and $T_{rr}$*($r_{out}$ - $\delta r$; $r_{in}$ - $\delta r$), weighting C($r_{out}$; $r_{in}$) by an amplitude of C($r_{out}$; $r_{in}$) for each element, and obtaining a sum of weighted C($r_{out}$; $r_{in}$) on the second plane for each position $r_{in}$ on the first plane, or on the first plane for each position $r_{out}$ on the second plane; and (5) a phase differential image generation unit for generating a phase differential image based on the complex differential interference image.

An embodiment is an observation method. The observation method includes (1) an interference intensity image acquisition step of acquiring an interference intensity image of an observation object irradiated with light along each of a plurality of light irradiation directions; (2) a complex amplitude image generation step of generating a complex amplitude image based on the interference intensity image for each of the plurality of light irradiation directions; (3) a transmission matrix generation step of generating, based on the complex amplitude image of each of the plurality of light irradiation directions, a transmission matrix $T_{rr}$($r_{out}$; $r_{in}$) which relates a wavefront of light at each position $r_{in}$ on a first plane in a case in which the observation object is not present to a wavefront of light at each position $r_{out}$ on a second plane, which is the same as the first plane, in a case in which the observation object is present; (4) a complex differential interference image generation step of generating, based on the transmission matrix $T_{rr}$($r_{out}$; $r_{in}$), a complex differential interference image by generating C($r_{out}$; $r_{in}$), which is an element-wise product of $T_{rr}$($r_{out}$; $r_{in}$) and $T_{rr}$*($r_{out}$ - $\delta r$; $r_{in}$ - $\delta r$), weighting C($r_{out}$; $r_{in}$) by an amplitude of C($r_{out}$; $r_{in}$) for each element, and obtaining a sum of weighted C($r_{out}$; $r_{in}$) on the second plane for each position $r_{in}$ on the first plane, or on the first plane for each position $r_{out}$ on the second plane; and (5) a phase differential image generation step of generating a phase differential image based on the complex differential interference image.

An embodiment is a program. The program is a program for causing a computer to execute the respective steps of the observation method of the above configuration.

An embodiment is a recording medium. The recording medium is a computer readable recording medium storing the program of the above configuration.

**Advantageous Effects of Invention**

According to the observation apparatus and the observation method of the embodiments, it is possible to reduce influence of multiple scattered light and observe an observation object without staining the observation object even in the case in which the observation object is a multiple scattering object.

**Brief Description of Drawings**

[FIG. 1] FIG. 1 is a diagram illustrating a configuration of an observation apparatus 1A.

[FIG. 2] FIG. 2 is a diagram illustrating a configuration of an observation apparatus 1B.

[FIG. 3] FIG. 3 is a diagram illustrating a configuration of an observation apparatus 1C.

[FIG. 4] FIG. 4 is a diagram illustrating a configuration of an analysis unit 50 of each of the observation apparatuses 1A to 1C.

[FIG. 5] FIG. 5 is a flowchart illustrating an observation method.

[FIG. 6] FIG. 6 includes (a) - (e) diagrams illustrating examples of scanning of a light irradiation direction on an observation object S in an interference intensity image acquisition step S51.

[FIG. 7] FIG. 7 is a diagram illustrating input light $U_{in}$($k_{in}$) and output light $u_{out}$($r_{out}$) in the case in which an interference intensity image is imaged by an imaging unit.

[FIG. 8] FIG. 8 is another flowchart illustrating the observation method.

[FIG. 9] FIG. 9 includes diagrams showing (a) a distribution of the light irradiation direction in a $k_x k_y$ wavenumber space, and (b) a distribution of a transmission matrix $T_{rr}$($r_{out}$; $r_{in}$ = $r_0$) in an xy space when focused irradiation of light is performed on a certain point $r_0$, in the case in which the number of light irradiation directions is equal to the number of pixels of a complex amplitude image.

[FIG. 10] FIG. 10 includes diagrams showing (a) a distribution of the light irradiation direction in the $k_x k_y$ wavenumber space, and (b) a distribution of a transmission matrix T'$_{rr}$($r_{out}$; $r_{in}$ = $r_0$) in the xy space when the focused irradiation of the light is performed on the certain point $r_0$, in the case in which the number of light irradiation directions is smaller than the number of pixels of the complex amplitude image.

[FIG. 11] FIG. 11 is a diagram for describing a method of generating a complex differential interference image W($r_{in}$) in the case in which the number of light irradiation directions is smaller than the number of pixels of the complex amplitude image.

[FIG. 12] FIG. 12 is a diagram schematically illustrating an arrangement at the time of a simulation A.

[FIG. 13] FIG. 13 is a diagram showing the result of the simulation A.

[FIG. 14] FIG. 14 is a diagram showing the result of the simulation A.

[FIG. 15] FIG. 15 is a diagram schematically illustrating an arrangement at the time of a simulation B.

[FIG. 16] FIG. 16 is a diagram showing the result of the simulation B.

[FIG. 17] FIG. 17 is a diagram showing the result of the simulation B.

[FIG. 18] FIG. 18 is a diagram illustrating a configuration of an observation apparatus 100.

[FIG. 19] FIG. 19 is a diagram schematically illustrating incidence of first split light and second split light on an observation object S and incidence of the first split light and the second split light on an imaging unit 150 after passing through the observation object S in the observation apparatus 100.

## Description of Embodiments

Hereinafter, embodiments of an observation apparatus and an observation method will be described in detail with reference to the accompanying drawings. In the description of the drawings, the same elements will be denoted by the same reference signs, and redundant description will be omitted. The present invention is not limited to these examples, and the Claims, their equivalents, and all the changes within the scope are intended as would fall within the scope of the present invention.

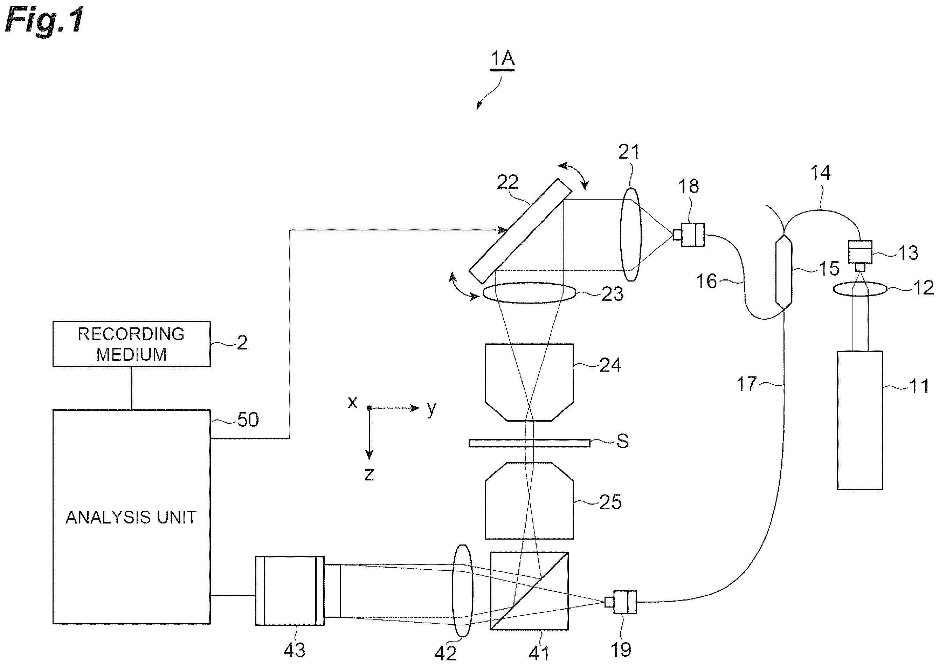

FIG. 1 is a diagram illustrating a configuration of an observation apparatus 1A. The observation apparatus 1A includes a light source 11, a lens 12, a lens 21, a mirror 22, a lens 23, a condenser lens 24, an objective lens 25, a beam splitter 41, a lens 42, an imaging unit 43, and an analysis unit 50, and the like.

The light source 11 outputs spatially and temporally coherent light, and is preferably a laser light source. The lens 12 is optically coupled to the light source 11, focuses the light output from the light source 11 on a light input end 13 of an optical fiber 14, and inputs the light to the light input end 13. The optical fiber 14 guides the light input to the light input end 13 by the lens 12 to a fiber coupler 15.

The fiber coupler 15 couples the light between the optical fiber 14 and optical fibers 16 and 17, splits the light guided by and arriving from the optical fiber 14 into two light beams, guides one split light by the optical fiber 16, and guides the other split light by the optical fiber 17. The light guided by the optical fiber 16 is output as diverging light from a light output end 18. The light guided by the optical fiber 17 is output as diverging light from a light output end 19.

The lens 21 is optically coupled to the light output end 18, and collimates the light output as the diverging light from the light output end 18. The mirror 22 is optically coupled to the lens 21, and reflects the light arriving from the lens 21 to the lens 23. An orientation of a reflection surface of the mirror 22 is changeable. The lens 23 is optically coupled to the mirror 22. The condenser lens 24 is optically coupled to the lens 23. The lens 23 and the condenser lens 24 preferably constitute a 4f optical system.

The lens 23 and the condenser lens 24 irradiate an observation object S with the light from a light irradiation direction according to the orientation of the reflection surface of the mirror 22. The objective lens 25 is optically coupled to the condenser lens 24. The observation object S is disposed between the objective lens 25 and the condenser lens 24. The objective lens 25 inputs the light (object light) output from the condenser lens 24 and passed through the observation object S, and outputs the light to the beam splitter 41.

The beam splitter 41 is optically coupled to the objective lens 25, and further, is optically coupled also to the light output end 19. The beam splitter 41 combines the light (object light) output and arriving from the objective lens 25 and the light (reference light) output and arriving from the light output end 19, and outputs the light to the lens 42. The lens 42 is optically coupled to the beam splitter 41, collimates the object light and the reference light arriving from the beam splitter 41, and outputs the light to the imaging unit 43.

The imaging unit 43 is optically coupled to the lens 42, and images an interference fringe image (interference intensity image) generated by interference between the object light and the reference light arriving from the lens 42. An incident direction of the reference light is inclined with respect to an incident direction of the object light on an imaging plane of the imaging unit 43. A position at which the object light and the reference light are combined by the beam splitter 41 may be in the subsequent stage of the imaging lens, and in addition, in consideration of the influence of aberration, it is desirable that the position is set between the objective lens 25 and the lens 42 as illustrated in the diagram.

The analysis unit 50 is electrically connected to the imaging unit 43, inputs the interference intensity image captured by the imaging unit 43, and performs required processing based on the interference intensity image. The details of the analysis unit 50 will be described later.

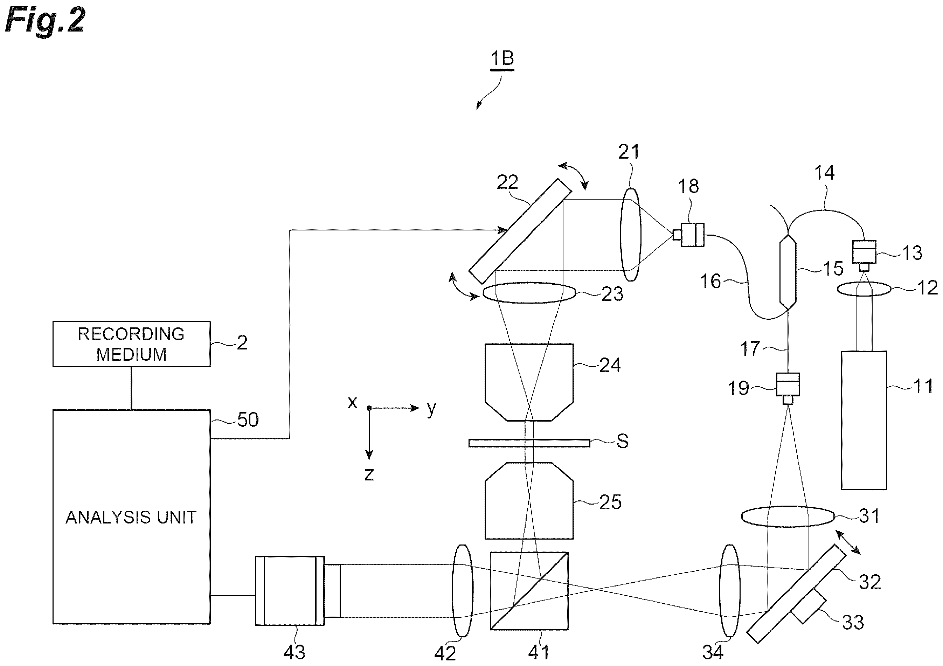

FIG. 2 is a diagram illustrating a configuration of an observation apparatus 1B. The observation apparatus 1B illustrated in FIG. 2 includes a lens 31, a mirror 32, and a lens 34, and the like, in addition to the configuration of the observation apparatus 1A illustrated in FIG. 1.

The lens 31 is optically coupled to the light output end 19, and collimates the light (reference light) output as diverging light from the light output end 19. The mirror 32 is optically coupled to the lens 31, and reflects the light arriving from the lens 31 to the lens 34. The lens 34 is optically coupled to the mirror 32, and outputs the light arriving from the mirror 32 to the beam splitter 41.

The light output from the lens 34 is once focused before the beam splitter 41, and then input to the beam splitter 41 as diverging light. The beam splitter 41 combines the light (object light) output and arriving from the objective lens 25 and the light (reference light) output and arriving from the lens 34, and outputs the light to the lens 42 in a coaxial manner. The imaging unit 43 images the interference fringe image (interference intensity image) generated by interference between the object light and the reference light arriving from the lens 42. The incident direction of the reference light is parallel to the incident direction of the object light on the imaging plane of the imaging unit 43.

A drive unit 33 moves the mirror 32 in a direction perpendicular to a reflection surface of the mirror 32. The drive unit 33 is, for example, a piezoelectric actuator. The movement of the mirror 32 changes an optical path difference (phase difference) of the object light and the reference light from light splitting by the fiber coupler 15 to combining by the beam splitter 41. In the case in which the optical path difference is different, the interference intensity image captured by the imaging unit 43 is also different.

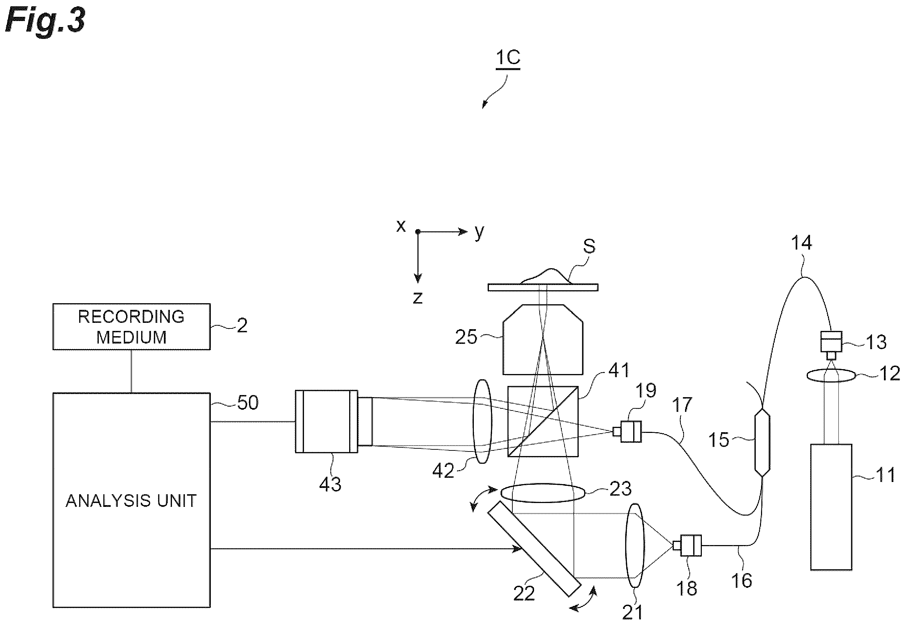

The observation apparatus is not limited to the configuration examples illustrated in FIG. 1 and FIG. 2, and various modifications are possible. In the configuration of each of the observation apparatus 1A (FIG. 1) and the observation apparatus 1B (FIG. 2), the light transmitted through the observation object S is set to the object light, and in addition, the light reflected by the observation object S may be set to the object light as in a configuration of an observation apparatus 1C (FIG. 3) described below.

FIG. 3 is a diagram illustrating a configuration of an observation apparatus 1C. The observation apparatus 1C includes the light source 11, the lens 12, the lens 21, the mirror 22, the lens 23, the objective lens 25, the beam splitter 41, the lens 42, the imaging unit 43, and the analysis unit 50, and the like. In the following description, differences from the observation apparatus 1A (FIG. 1) will be mainly described.

The lens 21 is optically coupled to the light output end 18 of the optical fiber 16, and collimates the light output as diverging light from the light output end 18. The mirror 22 is optically coupled to the lens 21, and reflects the light arriving from the lens 21 to the lens 23. The orientation of the reflection surface of the mirror 22 is changeable. The lens 23 is optically coupled to the mirror 22. The objective lens 25 is optically coupled to the lens 23.

The beam splitter 41 is disposed between the lens 23 and the objective lens 25. The lens 23 and the objective lens 25 preferably constitute a 4f optical system. The lens 23 and the objective lens 25 irradiate the observation object S with the light from the light irradiation direction according to the orientation of the reflection surface of the mirror 22. The objective lens 25 inputs the light (object light) reflected from the observation object S, and outputs the light to the beam splitter 41.

The beam splitter 41 is optically coupled to the objective lens 25, and further, is optically coupled also to the light output end 19 of the optical fiber 17. The beam splitter 41 combines the light (object light) output and arriving from the objective lens 25 and the light (reference light) output and arriving from the light output end 19, and outputs the light to the lens 42. The lens 42 is optically coupled to the beam splitter 41, collimates the object light and the reference light arriving from the beam splitter 41, and outputs the light to the imaging unit 43.

The imaging unit 43 is optically coupled to the lens 42, and images the interference fringe image (interference intensity image) generated by interference between the object light and the reference light arriving from the lens 42. The incident direction of the reference light is inclined with respect to the incident direction of the object light on the imaging plane of the imaging unit 43. The position at which the object light and the reference light are combined by the beam splitter 41 may be in the subsequent stage of the imaging lens, and in addition, in consideration of the influence of aberration, it is desirable that the position is set between the objective lens 25 and the lens 42 as illustrated in the diagram.

In the configuration of the observation apparatus 1C (FIG. 3), as in the observation apparatus 1B (FIG. 2), the mechanism (the lens 31, the mirror 32, the drive unit 33, and the lens 34 in FIG. 2) for changing the optical path length of the reference light may be provided for changing the optical path difference (phase difference) of the object light and the reference light from light splitting by the fiber coupler 15 to combining by the beam splitter 41. In this case, the incident direction of the reference light may be parallel to the incident direction of the object light on the imaging plane of the imaging unit 43.

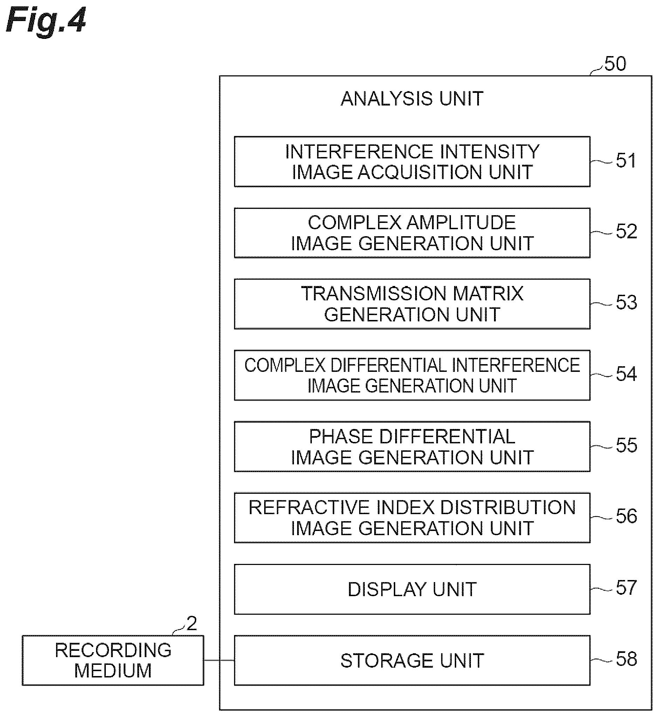

FIG. 4 is a diagram illustrating a configuration of the analysis unit 50 provided in each of the observation apparatuses 1A to 1C. The analysis unit 50 includes an interference intensity image acquisition unit 51, a complex amplitude image generation unit 52, a transmission matrix generation unit 53, a complex differential interference image generation unit 54, a phase differential image generation unit 55, a refractive index distribution image generation unit 56, a display unit 57, and a storage unit 58.

The analysis unit 50 may be configured by using a computer. The analysis unit 50 includes a processing device such as a CPU, a GPU, a DSP, an FPGA, or the like, and a storage device such as a hard disk drive, a flash memory, a RAM, a ROM, or the like.

The interference intensity image acquisition unit 51 irradiates the observation object S with the light along each of a plurality of light irradiation directions by changing the orientation of the reflection surface of the mirror 22. Further, the interference intensity image acquisition unit 51 acquires the interference intensity image at a reference position for each of the plurality of light irradiation directions from the imaging unit 43.

The interference intensity image acquisition unit 51 includes an output port used for outputting a control signal for changing the orientation of the reflection surface of the mirror 22, and further, includes an input port used for inputting the interference intensity image from the imaging unit 43. It is not necessary to move the objective lens 25 in an optical axis direction. The reference position is an image plane position having a conjugate relationship with respect to the imaging plane of the imaging unit 43.

The complex amplitude image generation unit 52, the transmission matrix generation unit 53, the complex differential interference image generation unit 54, the phase differential image generation unit 55, and the refractive index distribution image generation unit 56 perform processing based on the interference intensity image. The display unit 57 displays an image to be processed, an image in the middle of the processing, an image after the processing, and the like, and includes, for example, a liquid crystal display.

The storage unit 58 stores data of various images. The complex amplitude image generation unit 52, the transmission matrix generation unit 53, the complex differential interference image generation unit 54, the phase differential image generation unit 55, the refractive index distribution image generation unit 56, the display unit 57, and the storage unit 58 may be configured by using a cloud computing.

The storage unit 58 also stores a program for causing the interference intensity image acquisition unit 51, the complex amplitude image generation unit 52, the transmission matrix generation unit 53, the complex differential interference image generation unit 54, the phase differential image generation unit 55, and the refractive index distribution image generation unit 56 to execute respective steps of the processing. The above program may be stored in the storage unit 58 at the time of manufacture or shipment of the observation apparatus, may be acquired via a communication line after shipment and then stored in the storage unit 58, or may be recorded in a computer readable recording medium 2 and then stored in the storage unit 58. The recording medium 2 may be an arbitrary medium such as a flexible disk, a CD-ROM, a DVD-ROM, a BD-ROM, a USB memory, or the like.

The details of the processing step of each of the interference intensity image acquisition unit 51, the complex amplitude image generation unit 52, the transmission matrix generation unit 53, the complex differential interference image generation unit 54, the phase differential image generation unit 55, and the refractive index distribution image generation unit 56 will be described later.

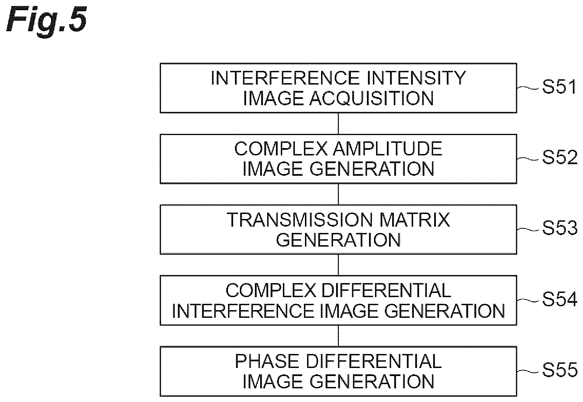

FIG. 5 is a flowchart illustrating an observation method. The observation method which is illustrated in this flowchart can be applied to each of the observation apparatus 1A (FIG. 1), the observation apparatus 1B (FIG. 2), and the observation apparatus 1C (FIG. 3).

The observation method is a method for generating a phase differential image, and includes an interference intensity image acquisition step S51, a complex amplitude image generation step S52, a transmission matrix generation step S53, a complex differential interference image generation step S54, and a phase differential image generation step S55.

The processing step of the interference intensity image acquisition step S51 is performed by the interference intensity image acquisition unit 51. The processing step of the complex amplitude image generation step S52 is performed by the complex amplitude image generation unit 52. The processing step of the transmission matrix generation step S53 is performed by the transmission matrix generation unit 53. The processing step of the complex differential interference image generation step S54 is performed by the complex differential interference image generation unit 54. The processing step of the phase differential image generation step S55 is performed by the phase differential image generation unit 55.

In the interference intensity image acquisition step S51, the interference intensity image acquisition unit 51 irradiates the observation object S with the light along each of the plurality of light irradiation directions by changing the orientation of the reflection surface of the mirror 22. In addition, the interference intensity image acquisition unit 51 acquires the interference intensity image at the reference position for each of the plurality of light irradiation directions from the imaging unit 43.

In each of FIG. 1, FIG. 2, and FIG. 3, an xyz orthogonal coordinate system is illustrated for convenience of explanation. The z axis is parallel to the optical axis of the objective lens 25. The reference position is the image plane position having a conjugate relationship with respect to the imaging plane of the imaging unit 43. This position is set to $z = 0$. The light irradiation direction on the observation object S can be represented by $k_x$ and $k_y$ in a wavenumber vector ($k_x$, $k_y$, $k_z$) of the irradiation light.

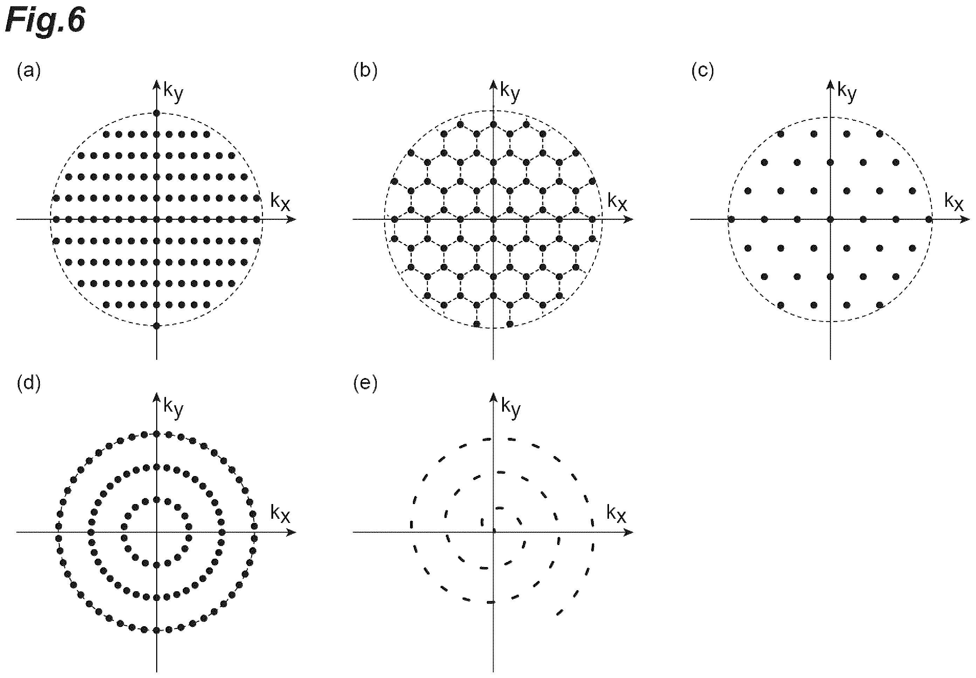

FIG. 6 includes diagrams illustrating examples of scanning of the light irradiation direction on the observation object S in the interference intensity image acquisition step S51. In the diagrams, a position of each circular point represents the light irradiation direction in the $k_x k_y$ plane in which the horizontal axis is set to $k_x$ and the vertical axis is set to $k_y$.

The scanning of the light irradiation direction, in the $k_x k_y$ plane, (a) may be discretely and periodically arranged in a rectangular lattice shape, (b) may be discretely and periodically arranged in a honeycomb shape, (c) may be discretely and periodically arranged in a hexagonal lattice shape, (d) may be discretely arranged on a circumference of each of a plurality of concentric circles, or (e) may be discretely arranged in a spiral shape.

In any of the above cases, the light irradiation direction can be scanned as far as it is allowed by NA of the condenser lens 24 provided in the configuration of each of FIG. 1 and FIG. 2, or the objective lens 25 provided in the configuration of FIG. 3. Raster scan or random scan may be used. In the case of the raster scan, return scan may be performed or may not be performed.

In the complex amplitude image generation step S52, the complex amplitude image generation unit 52 generates, for each of the plurality of light irradiation directions, a complex amplitude image based on the interference intensity image acquired by the interference intensity image acquisition unit 51. In the case of using the observation apparatus 1A (FIG. 1) or the observation apparatus 1C (FIG. 3), the complex amplitude image generation unit 52 can generate the complex amplitude image based on one interference intensity image by using a Fourier fringe analysis method. In the case of using the observation apparatus 1B (FIG. 2), the complex amplitude image generation unit 52 can generate the complex amplitude image based on three or more interference intensity images having different optical path differences (phase differences) between the object light and the reference light by using a phase shift method.

In the transmission matrix generation step S53, the transmission matrix generation unit 53 generates a transmission matrix as described below based on the complex amplitude image of each of the plurality of light irradiation directions generated by the complex amplitude image generation unit 52.

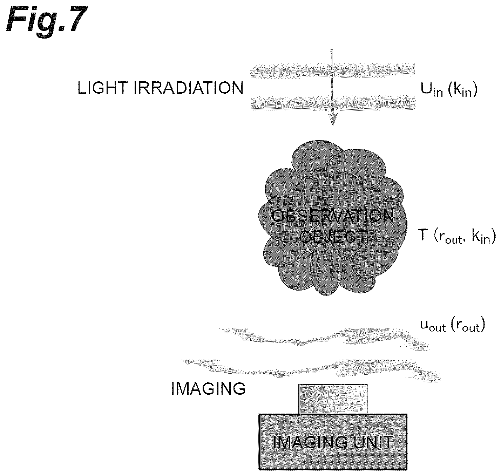

FIG. 7 is a diagram illustrating input light $U_{in}(k_{in})$ and output light $u_{out}(r_{out})$ in the case in which the interference intensity image is imaged by the imaging unit. $U_{in}(k_{in})$ represents a complex amplitude of a wavenumber $k_{in}$ of the light with which the observation object is irradiated as a plane wave. $u_{out}(r_{out})$ represents a complex amplitude of a position $r_{out}$ of the light output from the observation object.

The relationship between $U_{in}(k_{in})$ and $u_{out}(r_{out})$ is represented by the following Formula (1). An n-th element $U_{in}(k_{in}^n)$ of a column vector $U_{in}$ represents a complex amplitude of a plane wave of a wavenumber of $k_{in}^n$. An n-th element $u_{out}(r_{out}^n)$ of a column vector $u_{out}$ represents a complex amplitude of the light observed at a position $r_{out}^n$. A matrix $T_{rk}(r_{out}; k_{in})$ of N rows and N columns in the Formula represents a linear relationship between $U_{in}(k_{in})$ and $u_{out}(r_{out})$, and is referred to as a transmission matrix. A scattering process of the light in the observation object can be represented by the transmission matrix described above. An element $T_{n1,n2}$ of an n1-th row and an n2-th column of the matrix $T_{rk}(r_{out}; k_{in})$ represent a complex amplitude of the light observed at a position $r_{out}^{n1}$ in the case in which the plane wave having a wavenumber of $k_{in}^{n2}$ and an amplitude of 1 is input.

[Formula 1]

$$\begin{pmatrix} u_{out}(\mathbf{r}_{out}^1) \\ \vdots \\ u_{out}(\mathbf{r}_{out}^N) \end{pmatrix} = \begin{pmatrix} T(\mathbf{r}_{out}^1, \mathbf{k}_{in}^1) & \cdots & T(\mathbf{r}_{out}^1, \mathbf{k}_{in}^N) \\ \vdots & \ddots & \vdots \\ T(\mathbf{r}_{out}^N, \mathbf{k}_{in}^1) & \cdots & T(\mathbf{r}_{out}^N, \mathbf{k}_{in}^N) \end{pmatrix} \begin{pmatrix} U_{in}(\mathbf{k}_{in}^1) \\ \vdots \\ U_{in}(\mathbf{k}_{in}^N) \end{pmatrix}$$

$$= \begin{pmatrix} T_{1,1} & \cdots & T_{1,N} \\ \vdots & \ddots & \vdots \\ T_{N,1} & \cdots & T_{N,N} \end{pmatrix} \begin{pmatrix} U_{in}(\mathbf{k}_{in}^1) \\ \vdots \\ U_{in}(\mathbf{k}_{in}^N) \end{pmatrix} \quad (1)$$

The vector $U_{in}^n(k_{in})$ of the input light of the n-th light irradiation direction in the case in which the interference intensity image is imaged by the imaging unit for each of the plurality of light irradiation directions is represented by the following Formula (2), in which only the value of the n-th element is 1 and the values of the other elements are 0. For the above input light $U_{in}^n(k_{in})$, the output light $u_{out}^n(r_{out})$ is represented by the following Formula (3). The following Formula (3) corresponds to the complex amplitude which is obtained at the time of the n-th light irradiation direction.

[Formula 2]

$$U_{in}^n(\mathbf{k}_{in}) = \begin{pmatrix} U_{in}^n(\mathbf{k}_{in}^1) \\ \vdots \\ U_{in}^n(\mathbf{k}_{in}^N) \end{pmatrix} = \begin{pmatrix} 0 \\ \vdots \\ 0 \\ 1 \\ 0 \\ \vdots \\ 0 \end{pmatrix} \quad (2)$$

[Formula 3]

$$u_{out}^{n}(\mathbf{r}_{out}) = \begin{pmatrix} u_{out}^{n}(\mathbf{r}_{out}^{1}) \\ \vdots \\ u_{out}^{n}(\mathbf{r}_{out}^{N}) \end{pmatrix} \qquad (3)$$

From the above Formula (2) and the above Formula (1), the following Formula (4) is obtained. In addition, the following Formula (5) is obtained by similarly obtaining for each of the plurality of light irradiation directions. In this way, the transmission matrix $T_{rk}(r_{out}; k_{in})$ can be obtained.

[Formula 4]

$$\begin{pmatrix} u_{out}^{n}(\mathbf{r}_{out}^{1}) \\ \vdots \\ u_{out}^{n}(\mathbf{r}_{out}^{N}) \end{pmatrix} = \begin{pmatrix} T_{1,1} & \cdots & T_{1,N} \\ \vdots & \ddots & \vdots \\ T_{N,1} & \cdots & T_{N,N} \end{pmatrix} \begin{pmatrix} U_{in}(\mathbf{k}_{in}^{1}) \\ \vdots \\ U_{in}(\mathbf{k}_{in}^{N}) \end{pmatrix} = \begin{pmatrix} T_{1,n} \\ \vdots \\ T_{N,n} \end{pmatrix} \qquad (4)$$

[Formula 5]

$$T_{rk}\left(\mathbf{r}_{out}; \mathbf{k}_{in}\right) = \begin{pmatrix} T_{1,1} & \cdots & T_{1,N} \\ \vdots & \ddots & \vdots \\ T_{N,1} & \cdots & T_{N,N} \end{pmatrix} = \begin{pmatrix} u_{out}^{1}(\mathbf{r}_{out}^{1}) & \cdots & u_{out}^{N}(\mathbf{r}_{out}^{1}) \\ \vdots & \ddots & \vdots \\ u_{out}^{1}(\mathbf{r}_{out}^{N}) & \cdots & u_{out}^{N}(\mathbf{r}_{out}^{N}) \end{pmatrix} \qquad (5)$$

The transmission matrix $T_{rk}(r_{out}; k_{in})$ described above is a matrix in which an input is a wavenumber basis, and an output is a position basis. By using the following Formula (6), by performing Fourier transform on the transmission matrix $T_{rk}(r_{out}; k_{in})$ with respect to the input, it is possible to generate a transmission matrix $T_{rr}(r_{out}; r_{in})$ in which each of the input and the output is the position basis.

[Formula 6]

$$T_{rr}\left(\mathbf{r}_{out}; \mathbf{r}_{in}\right) = \int T_{rk}\left(\mathbf{r}_{out}; \mathbf{k}_{in}\right) \cdot \exp\left(i\mathbf{k}_{in}\mathbf{r}_{in}\right) d\mathbf{k}_{in} \qquad (6)$$

The transmission matrix $T_{rk}(r_{out}; k_{in})$ and the transmission matrix $T_{rr}(r_{out}; r_{in})$ which are generated as described above have the following optical meaning (see Non Patent Documents 1 to 3).

The transmission matrix $T_{rk}(r_{out}; k_{in})$ in which the input is the wavenumber basis and the output is the position basis is a matrix for providing a transmittance, with respect to a wavefront of the light at each wavenumber $k_{in}$ on a first plane in the case in which the observation object is not present (the input), to a wavefront of the light at each position $r_{out}$ on a second plane in the case in which the observation object is present (the output).

The transmission matrix $T_{rr}(r_{out}; r_{in})$ in which both the input and the output are the position basis is a matrix for providing a transmittance, with respect to a wavefront of the light at each position $r_{in}$ on the first plane in the case in which the observation object is not present (the input), to a wavefront of the light at each position $r_{out}$ on the second plane in the case in which the observation object is present (the output).

In the complex differential interference image generation step S54, the complex differential interference image generation unit 54 generates a complex differential interference image $W_{n}(r_{out})$ or a complex differential interference image $W_{n}(r_{in})$ as described below based on the transmission matrix $T_{rr}(r_{out}; r_{in})$ generated by the transmission matrix generation unit 53.

First, a complex conjugate of $T_{rr}(r_{out} - \delta r; r_{in} - \delta r)$ obtained by shearing both $r_{out}$ and $r_{in}$ by $\delta r$ with respect to $T_{rr}(r_{out}; r_{in})$ is set to $T_{rr}^{*}(r_{out} - \delta r; r_{in} - \delta r)$. An element-wise product of $T_{rr}(r_{out}; r_{in})$ and $T_{rr}^{*}(r_{out} - \delta r; r_{in} - \delta r)$ is set to $C(r_{out}; r_{in})$ (the following Formula (7)).

[Formula 7]

$$C\left(\mathbf{r}_{out}\right) = T_{rr}\left(\mathbf{r}_{out}; \mathbf{r}_{in}\right) T_{rr}^{*}\left(\mathbf{r}_{out} - \delta r; \mathbf{r}_{in} - \delta r\right) \qquad (7)$$

At least one of the x component $\delta x$ and the y component $\delta y$ of $\delta r$ is non-zero. In the case in which $\delta x \neq 0$ and $\delta y = 0$, the complex differential interference image in which the x direction is the shear direction is obtained. In the case in which $\delta x = 0$ and $\delta y \neq 0$, the complex differential interference image in which the y direction is the shear direction is obtained. In the case in which $\delta x \neq 0$ and $\delta y \neq 0$, the complex differential interference image in which a direction according to a ratio of $\delta x$ and $\delta y$ is the shear direction is obtained.

The complex differential interference image $W_n(r_{out})$ is generated by obtaining a sum of $C(r_{out}; r_{in})$ weighted by an amplitude of $C(r_{out}; r_{in})$ for each element on the first plane for each position $r_{out}$ on the second plane (the following Formula (8)). Alternatively, the complex differential interference image $W_n(r_{in})$ is generated by obtaining a sum of $C(r_{out}; r_{in})$ weighted by an amplitude of $C(r_{out}; r_{in})$ for each element on the second plane for each position $r_{in}$ on the first plane (the following Formula (9)). As represented in the above Formulas, it is preferable that the weighting of $C(r_{out}; r_{in})$ is given by the n-th power of the amplitude (the absolute value) of $C(r_{out}; r_{in})$. n is a real number larger than 1.

[Formula 8]

$$W_n\left(\mathbf{r}_{out}\right) = \sum_{\mathbf{r}_{in}} \left| C\left(\mathbf{r}_{out}; \mathbf{r}_{in}\right) \right|^{n-1} C\left(\mathbf{r}_{out}; \mathbf{r}_{in}\right) \qquad (8)$$

[Formula 9]

$$W_n\left(\mathbf{r}_{in}\right) = \sum_{\mathbf{r}_{out}} \left| C\left(\mathbf{r}_{out}; \mathbf{r}_{in}\right) \right|^{n-1} C\left(\mathbf{r}_{out}; \mathbf{r}_{in}\right) \qquad (9)$$

The sum calculation of the above Formula (8) is a calculation for generating the complex differential interference image $W_n(r_{out})$ of an output side spatially resolved case. That is, it is assumed that the input does not have a spatial resolution, and on the other hand, the output has a spatial resolution, and the sum is obtained for the basis of the input. This is analogous to a system in which the entire observation object is simultaneously irradiated with the light (that is, the spatial resolution is not provided for the input), and a two-dimensional image of the observation object is acquired (that is, the spatial resolution is provided for the output).

The sum calculation of the above Formula (9) is a calculation for generating the complex differential interference image $W_n(r_{in})$ of an input side spatially resolved case. That is, it is assumed that the input has a spatial resolution, and on the other hand, the output does not have a spatial resolution, and the sum is obtained for the basis of the output. This is analogous to a system in which focused irradiation of the light is performed on each position on the observation object and the focusing point is scanned (that is, the spatial resolution is provided for the input), and a total amount of the light passing through the observation object is measured for each focusing point (that is, the spatial resolution is not provided for the output). In this system, it is possible to acquire an image of the observation object in which influence of a scattering object existing between the observation object and the light receiving unit is suppressed.

In the phase differential image generation step S55, the phase differential image generation unit 55 generates a phase differential image by using the following Formula (10) based on the complex differential interference image $W_n(r_{out})$ of the output side spatially resolved case which is generated by the complex differential interference image generation unit 54. Alternatively, the phase differential image generation unit 55 generates a phase differential image by using the following Formula (11) based on the complex differential interference image $W_n(r_{in})$ of the input side spatially resolved case. A phase of the complex differential interference image $W_n(r_{out})$ or the complex differential interference image $W_n(r_{in})$ corresponds to the phase differential image.

[Formula 10]

$$\angle W_n\left(\mathbf{r}_{out}\right) \qquad (10)$$

[Formula 11]

$$\angle W_n\left(\mathbf{r}_{in}\right) \qquad (11)$$

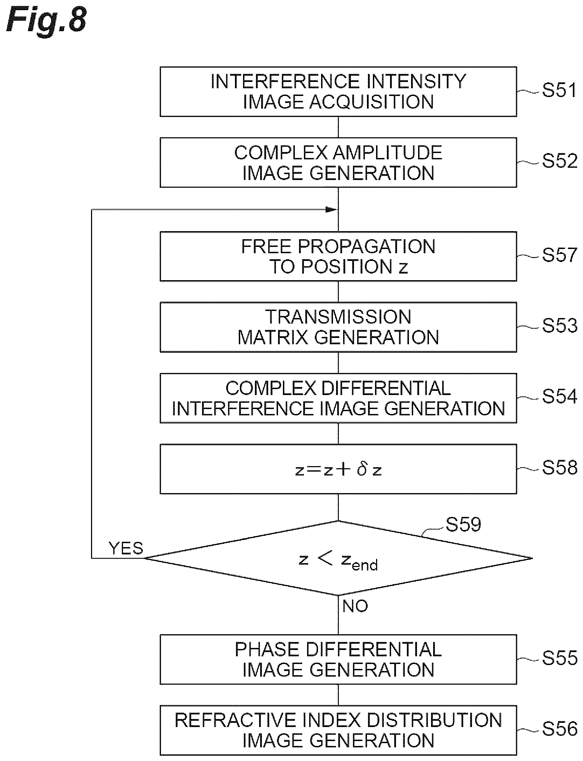

FIG. 8 is another flowchart illustrating the observation method. The observation method which is illustrated in this flowchart can be applied to each of the observation apparatus 1A (FIG. 1), the observation apparatus 1B (FIG. 2), and the observation apparatus 1C (FIG. 3).

The observation method is a method for generating the phase differential image at each of a plurality of positions in the z direction, and further, generating a three-dimensional refractive index distribution image, and includes a refractive index distribution image generation step S56 and steps S57 to S59, in addition to the interference intensity image acquisition step S51, the complex amplitude image generation step S52, the transmission matrix generation step S53, the complex differential interference image generation step S54, and the phase differential image generation step S55.

After the respective processing steps of the interference intensity image acquisition step S51 and the complex amplitude image generation step S52, in the step S57, for each of the plurality of light irradiation directions, free propagation of the light wavefront is performed to the position z, and the complex amplitude image u at the position z is obtained.

For example, in the case in which the free propagation of the light wavefront performed from the position of $z = 0$ to the position of $z = d$ is assumed, when the complex amplitude image at the position of $z = 0$ is set to $u(x, y, 0)$, the two-dimensional Fourier transform of $u(x, y, 0)$ is set to $U(k_x, k_y, 0)$, the complex amplitude image at the position of $z = d$ is set to $u(x, y, d)$, and the two-dimensional Fourier transform of $u(x, y, d)$ is set to $U(k_x, k_y, d)$, the free propagation can be obtained by the calculation performed by the processing including the following Formula (12) and Formula (13). i is an imaginary unit, and $k_0$ is a wavenumber of the light in the observation object.

[Formula 12]

$$U(k_x, k_y, d) = U(k_x, k_y, 0) \exp(i\sqrt{k_0^2 - k_x^2 - k_y^2} d) \qquad (12)$$

[Formula 13]

$$u(x, y, d) = \int U(k_x, k_y, d) \exp(-ik_x x - ik_y y) dk_x dk_y \qquad (13)$$

After the processing step of the step S57, the respective processing steps of the transmission matrix generation step S53 and the complex differential interference image generation step S54 are performed. Subsequently, in the step S58, a value obtained by adding $\delta z$ to z is set as a new z, and further, in the step S59, it is determined whether or not the new z has reached a final value $z_{end}$. In the case in which it is determined in the step S59 that the new z has not reached the final value $z_{end}$, the process returns to the step S57. In the case in which it is determined in the step S59 that the new z has reached the final value $z_{end}$, the process proceeds to the phase differential image generation step S55.

The respective processing steps from the step S57 to the step S59 are repeatedly performed from the initial value of z to the final value $z_{end}$ in increments of $\delta z$. By the above repeated processing, the complex differential interference image generation unit 54 generates the complex differential interference image $W_n(r_{out}, z)$ or the complex differential interference image $W_n(r_{in}, z)$ at each z position in increments of $\delta z$ from the initial value of z to the final value $z_{end}$, that is, generates a three-dimensional complex differential interference image.

In the phase differential image generation step S55 subsequent to the step S59, the phase differential image generation unit 55 generates the phase differential image at each z position in increments of $\delta z$ from the initial value of z to the final value $z_{end}$, that is, generates a three-dimensional phase differential image. In addition, in the refractive index distribution image generation step S56, the refractive index distribution image generation unit 56 generates a three-dimensional refractive index distribution image of the observation object by performing deconvolution based on the three-dimensional phase differential image generated by the phase differential image generation unit 55.

In addition, it is ideal that the number of light irradiation directions on the observation object at the time of the interference intensity image acquisition step S51 and the number of pixels of the complex amplitude image are equal to each other. However, in reality, the number of light irradiation directions is smaller than the number of pixels of the complex amplitude image (under sampling). For example, in the case in which the number of pixels of the complex amplitude image is set to $1024 \times 1024$, it is possible but not easy to realize the same number of light irradiation directions. Further, it is also possible to consider using only an image in a partial range (the same number of pixels as the number of light irradiation directions) out of the image acquired by the imaging unit in the subsequent processing steps, and further, this leads to decrease in resolution, which is not preferable.

The integration calculation of the above Formula (6) for obtaining the transmission matrix $T_{rr}(r_{out}; r_{in})$ in which both the input and the output are the position basis becomes the sum calculation as shown in the following Formula (14) at the time of the actual numerical calculation. In the case in which the number of light irradiation directions is smaller than the number of pixels of the complex amplitude image, when the scanning of the light irradiation direction on the observation object is discrete and periodic in the $k_x k_y$ plane as illustrated in (a) to (c) in FIG. 6, instead of the ideal transmission matrix $T_{rr}$

($r_{out}$; $r_{in}$), a transmission matrix $T'_{rr}(r_{out}; r_{in})$ as represented by the following Formula (15) is obtained. $r_p$ shown in the following Formula (15) is set according to the periodic distribution of the positions of the plurality of light irradiation directions in the wavenumber space, and corresponds to the reciprocal of the period. $T'_{rr}(r_{out}; r_{in})$ of Formula (15) corresponds to a matrix obtained by repeatedly shifting and adding the ideal $T_{rr}(r_{out}; r_{in})$ by $r_p$.

[Formula 14]

$$T_{rr}\left(\mathbf{r}_{out};\mathbf{r}_{in}\right)=\sum_{\mathbf{k}_{in}}T_{rk}\left(\mathbf{r}_{out};\mathbf{k}_{in}\right)\cdot\exp\left(i\mathbf{k}_{in}\mathbf{r}_{in}\right) \qquad (14)$$

[Formula 15]

$$T'_{rr}\left(\mathbf{r}_{out};\mathbf{r}_{in}\right)=\sum_{\mathbf{k}_{in}}T_{rk}\left(\mathbf{r}_{out};\mathbf{k}_{in}\right)\cdot\exp\left(i\mathbf{k}_{in}\mathbf{r}_{in}\right)=\sum_{\mathbf{r}_{p}}T_{rr}\left(\mathbf{r}_{out};\mathbf{r}_{in}-\mathbf{r}_{p}\right) \qquad (15)$$

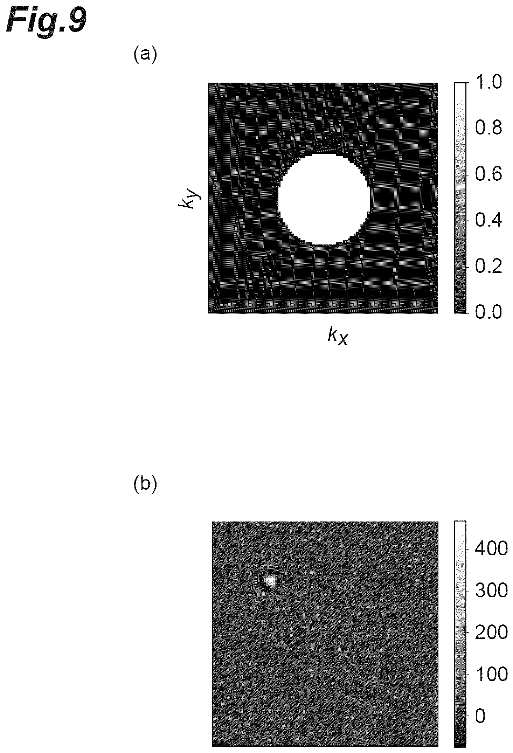

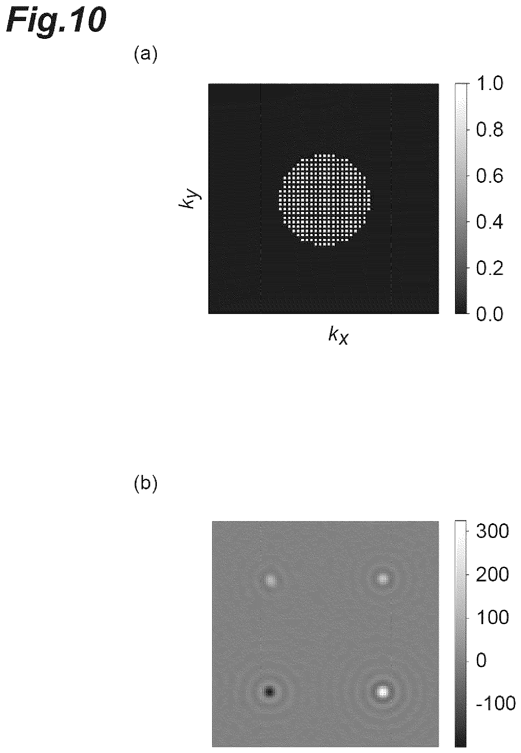

FIG. 9 includes diagrams showing (a) a distribution of the light irradiation direction in the $k_x k_y$ wavenumber space, and (b) a distribution of the transmission matrix $T_{rr}(r_{out}; r_{in} = r_0)$ in the xy space when the focused irradiation of the light is performed on a certain point $r_0$, in the case in which the number of light irradiation directions is equal to the number of pixels of the complex amplitude image. FIG. 10 includes diagrams showing (a) a distribution of the light irradiation direction in the $k_x k_y$ wavenumber space, and (b) a distribution of the transmission matrix $T'_{rr}(r_{out}; r_{in} = r_0)$ in the xy space when the focused irradiation of the light is performed on the certain point $r_0$, in the case in which the number of light irradiation directions is smaller than the number of pixels of the complex amplitude image. $r_{px}$ and $r_{py}$ shown in FIG. 10 are set according to the periodic distribution of the positions of the plurality of light irradiation directions in the wavenumber space, and correspond to the reciprocal of the period.

As shown in the above diagrams, in the case in which the number of light irradiation directions is smaller than the number of pixels of the complex amplitude image, the output is set to an output in the case of multi point irradiation. When the transmission matrix $T'_{rr}(r_{out}; r_{in})$ of Formula (15) described above is used to perform the processing of the respective subsequent steps, the results of a plurality of points in the space are added, and it is not possible to correctly obtain the complex differential interference image, the phase differential image, and the refractive index distribution image.

In consideration of the above, in the case of the under sampling described above, in the interference intensity image acquisition step S51, the interference intensity image acquisition unit 51 acquires the interference intensity image of each of the plurality of light irradiation directions from the imaging unit which images the interference intensity image when the observation object is irradiated with the light along each of the plurality of light irradiation directions in which positions of wavenumber vectors representing the light irradiation directions in the wavenumber space are discretely and periodically distributed as illustrated in (a) to (c) in FIG. 6.

In addition, in the complex differential interference image generation step S54, the complex differential interference image generation unit 54 generates the complex differential interference image $W_n(r_{in})$ of the input side spatially resolved case by obtaining the sum of the weighted $C'(r_{out}; r_{in})$ for each position $r_{in}$ on the first plane in each of a plurality of regions on the second plane, which are divided based on the periodic distribution of the positions of the wavenumber vectors respectively for the plurality of light irradiation directions in the wavenumber space. In this case, a complex conjugate of $T'_{rr}(r_{out} - \delta r; r_{in} - \delta r)$ which is obtained by shifting both $r_{out}$ and $r_{in}$ by $\delta r$ with respect to $T'_{rr}(r_{out}; r_{in})$ is set to $T'_{rr}{}^*(r_{out} - \delta r; r_{in} - \delta r)$. An element-wise product of $T'_{rr}(r_{out}; r_{in})$ and $T'_{rr}{}^*(r_{out} - \delta r; r_{in} - \delta r)$ is set to $C'(r_{out}; r_{in})$ (the following Formula (16)).

[Formula 16]

$$C'\left(\mathbf{r}_{out};\mathbf{r}_{in}\right)=T'_{rr}\left(\mathbf{r}_{out};\mathbf{r}_{in}\right)T'^{*}_{rr}\left(\mathbf{r}_{out}-\delta r;\mathbf{r}_{in}-\delta r\right) \qquad (16)$$

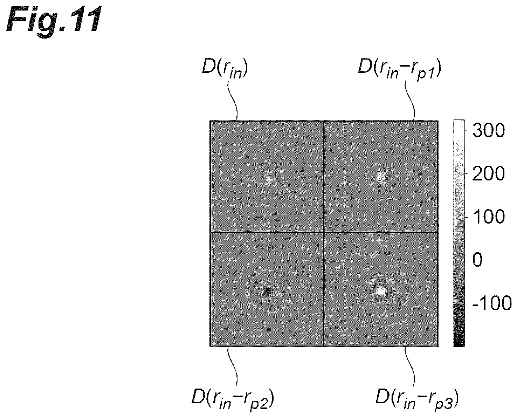

That is, in the case of the under sampling, in the complex differential interference image generation step S54, as shown in FIG. 11, the xy space of the transmission matrix $T'_{rr}(r_{out}; r_{in} = r_0)$ is divided into the regions $D(r_{in} - r_p)$ including the respective irradiation points. In addition, by obtaining the sum in each of the plurality of above regions $D(r_{in} - r_p)$, the complex differential interference image $W_n(r_{in})$ of the input side spatially resolved case is generated (the following Formula (17)).

[Formula 17]

$$W_n\left(\mathbf{r}_{in}-\mathbf{r}_p\right) = \sum_{\mathbf{r}_{out}\in D\left(\mathbf{r}_{in}-\mathbf{r}_p\right)}\left|C'\left(\mathbf{r}_{out};\mathbf{r}_{in}\right)\right|^{n-1} C'\left(\mathbf{r}_{out};\mathbf{r}_{in}\right)$$

$$\simeq \sum_{\mathbf{r}_{out}}\left|C\left(\mathbf{r}_{out};\mathbf{r}_{in}\right)\right|^{n-1} C\left(\mathbf{r}_{out};\mathbf{r}_{in}\right) \qquad (17)$$

Next, simulation results will be described. Simulations A and B described below were performed by using the measurement system illustrated in FIG. 2, and performed according to the procedure illustrated in FIG. 8.

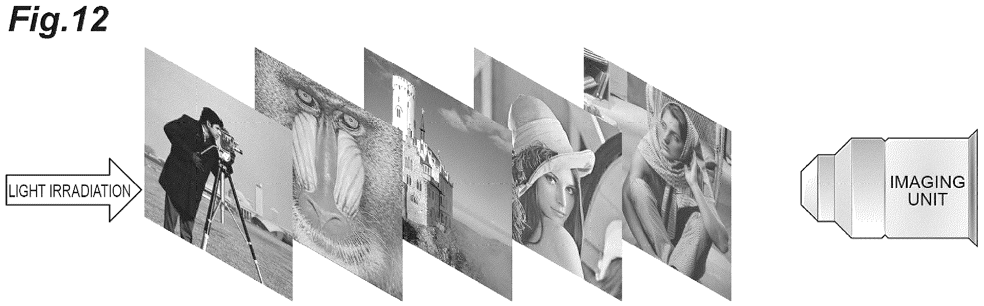

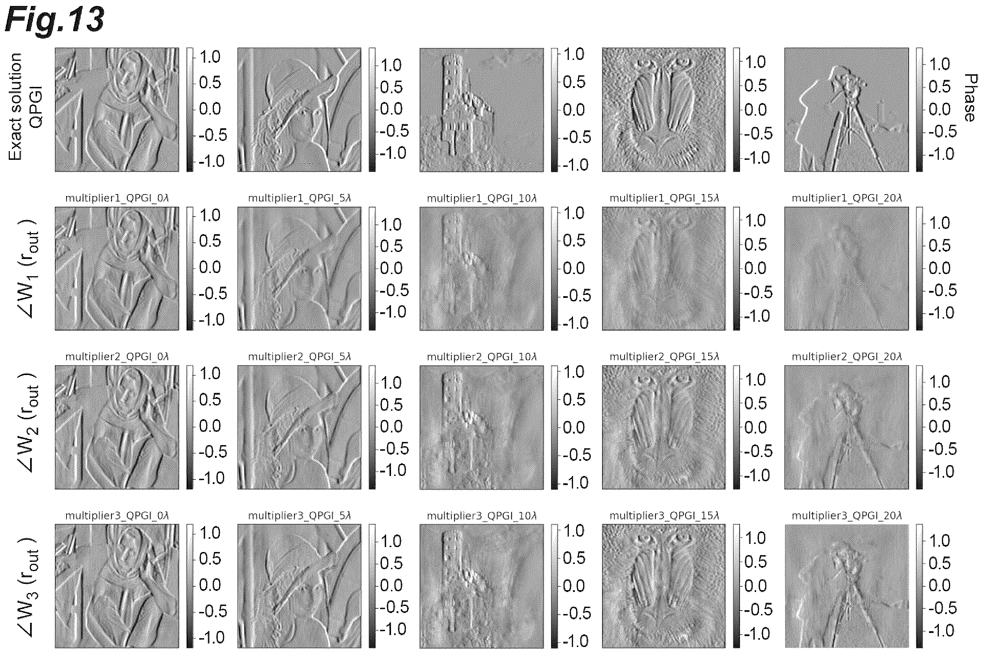

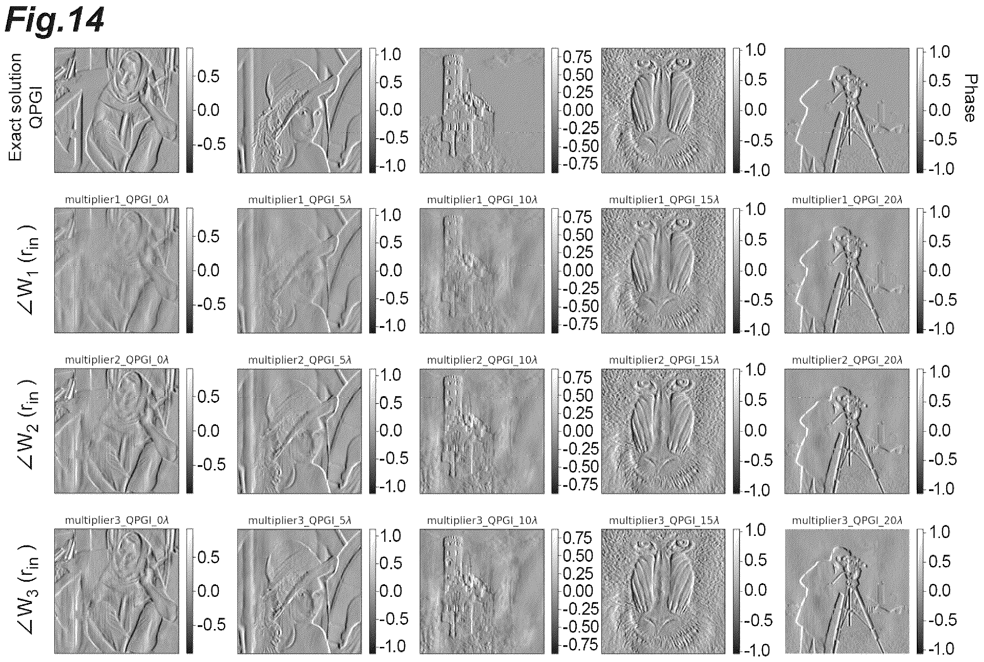

In the simulation A, as illustrated in FIG. 12, the simulation was performed by using, as the observation object, five types of phase images arranged in parallel at intervals. FIG. 12 is a diagram schematically illustrating the arrangement at the time of performing the simulation A. FIG. 13 is a diagram showing the phase differential images which are generated in the case of the output side spatially resolved image (the above Formula (8)). FIG. 14 is a diagram showing the phase differential images which are generated in the case of the input side spatially resolved image (the above Formula (9)).

In each of FIG. 13 and FIG. 14, a first row shows the phase differential images of the exact solution, a second row shows the phase differential images in the case in which it is set to n = 1, a third row shows the phase differential images in the case in which it is set to n = 2, and a fourth row shows the phase differential images in the case in which it is set to n = 3.

As can be seen by comparing the diagrams of FIG. 13 and FIG. 14, in the case of the output side spatially resolved image, a clearer phase differential image is obtained as it is closer to the imaging unit, and in the case of the input side spatially resolved image, a clearer phase differential image is obtained as it is farther from the imaging unit. Further, when the respective cases of n = 1, n = 2, and n = 3 are compared with each other, the sharpest phase differential image is obtained in the case of n = 3.

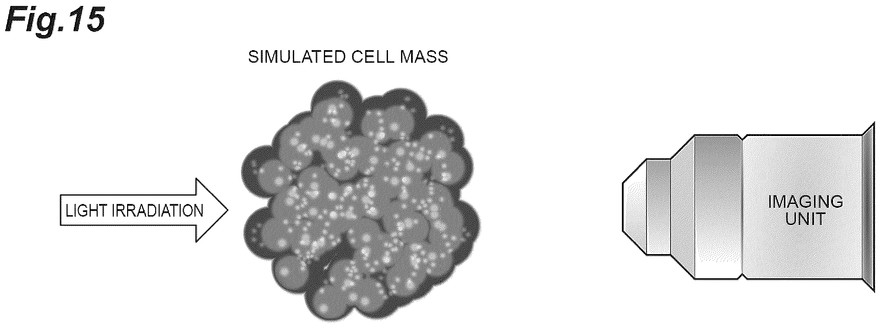

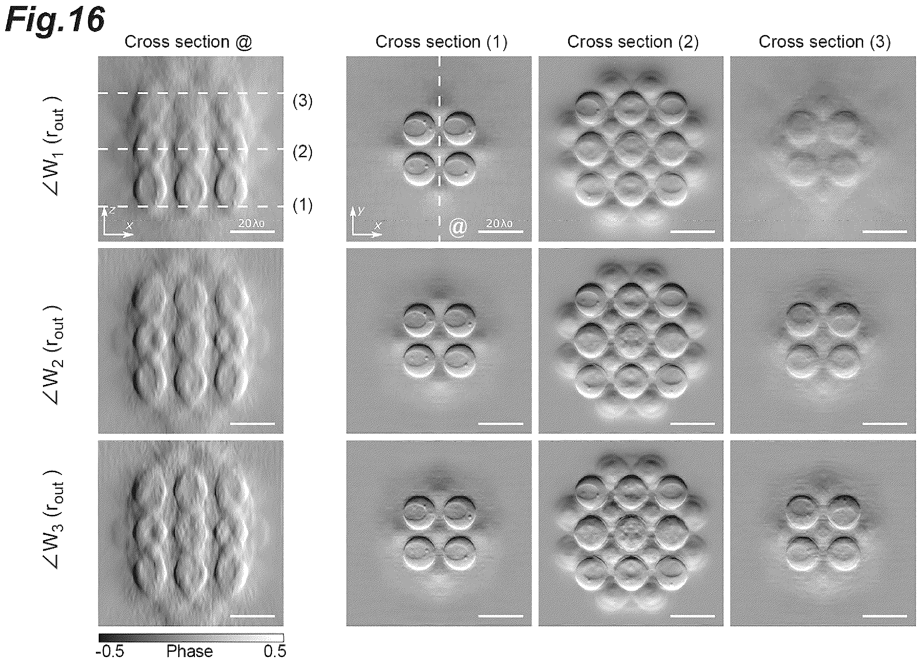

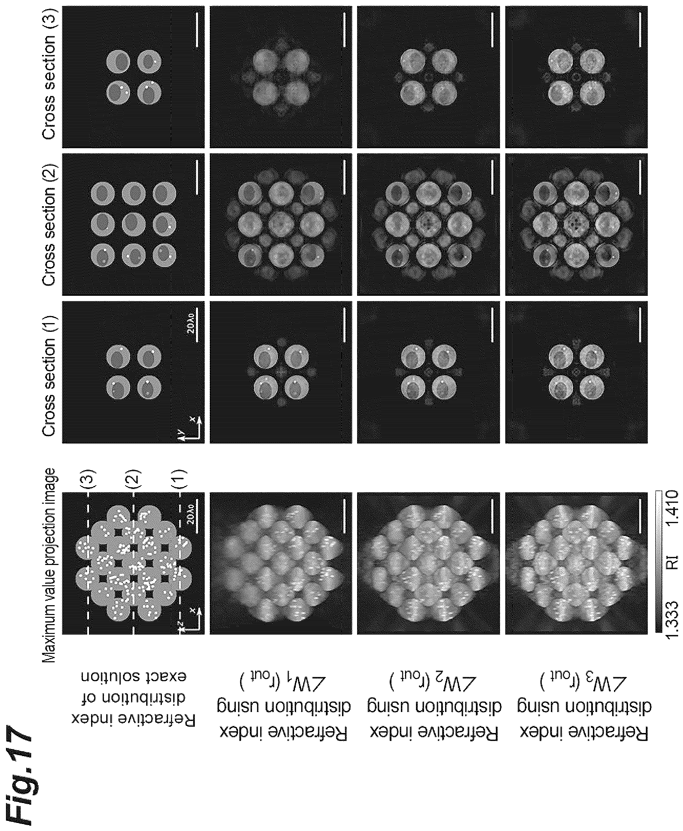

In the simulation B, as illustrated in FIG. 15, the simulation was performed by using a simulated cell mass as the observation object. FIG. 15 is a diagram schematically illustrating the arrangement at the time of performing the simulation B. In this case, the results obtained in the case of the output side spatially resolved image (the above Formula (8)) are shown. Each of FIG. 16 and FIG. 17 is a diagram showing the results of the simulation B.

In FIG. 16, an upper row shows the phase differential images in the case in which it is set to n = 1, a middle row shows the phase differential images in the case in which it is set to n = 2, and a lower row shows the phase differential images in the case in which it is set to n = 3. Further, in FIG. 16, a left side column shows the phase differential images in a cross section parallel to the z axis, and the other columns show the phase differential images in xy cross sections respectively at three positions in the z direction.

In FIG. 17, a first row shows the refractive index distribution images of the exact solution, a second row shows the refractive index distribution images in the case in which it is set to n = 1, a second row shows the refractive index distribution images in the case in which it is set to n = 2, and a fourth row shows the refractive index distribution images in the case in which it is set to n = 3. Further, in FIG. 17, a left side column shows maximum value projection images in the y direction, and the other columns show the refractive index distribution images in xy cross sections respectively at three positions in the z direction.

In the simulation B also, when the respective cases of n = 1, n = 2, and n = 3 are compared with each other, the sharpest phase differential image and the refractive index distribution image are obtained in the case of n = 3.

From the results obtained in the simulation A, in the phase differential image generation step S55, it is preferable that the phase differential image generation unit 55 generates the complex differential interference image by obtaining the sum of the weighted $C(\mathbf{r}_{out}; \mathbf{r}_{in})$ on the second plane for each position $\mathbf{r}_{in}$ on the first plane for the position relatively far from the imaging unit. On the other hand, it is preferable that the phase differential image generation unit 55 generates the complex differential interference image by obtaining the sum of the weighted $C(\mathbf{r}_{out}; \mathbf{r}_{in})$ on the first plane for each position $\mathbf{r}_{out}$ on the second plane for the position relatively close to the imaging unit.

As described above, according to the present embodiment, even in the case in which the observation object is the multiple scattering object, it is possible to have a good degree of depth, and it is possible to reduce the influence of the multiple scattered light and observe the observation object without staining the observation object.

In the observation apparatus and the observation method described above, out of the first split light and the second split light output from the light source and split into two light beams, the first split light of the one side is received by the imaging unit as the reference light without passing through the observation object, and the second split light of the other side is received by the imaging unit as the object light passed through the observation object, the interference intensity image generated by the interference between the first split light (the reference light) and the second split light (the object light) is imaged for each of the plurality of light irradiation directions of the second split light (the object light), and the complex amplitude image is generated based on the interference intensity image.

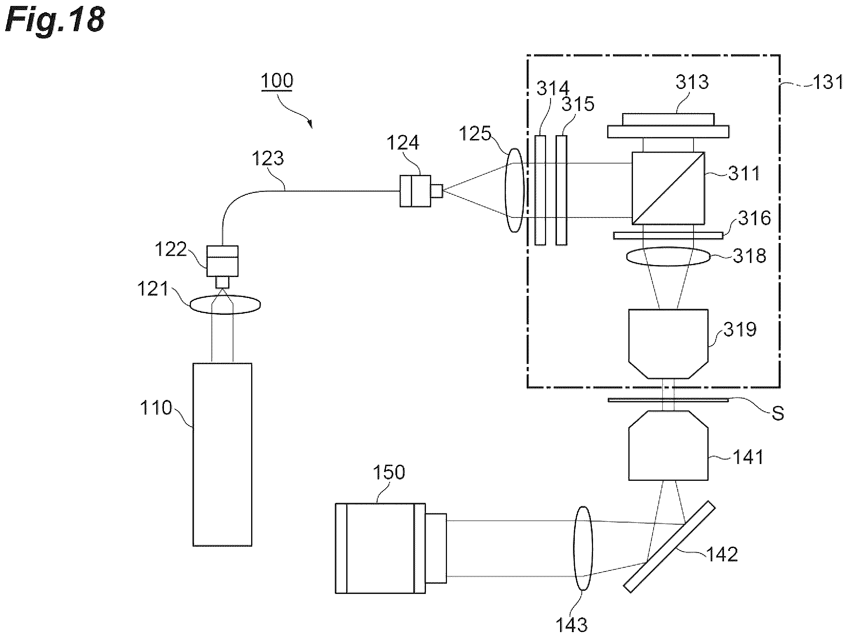

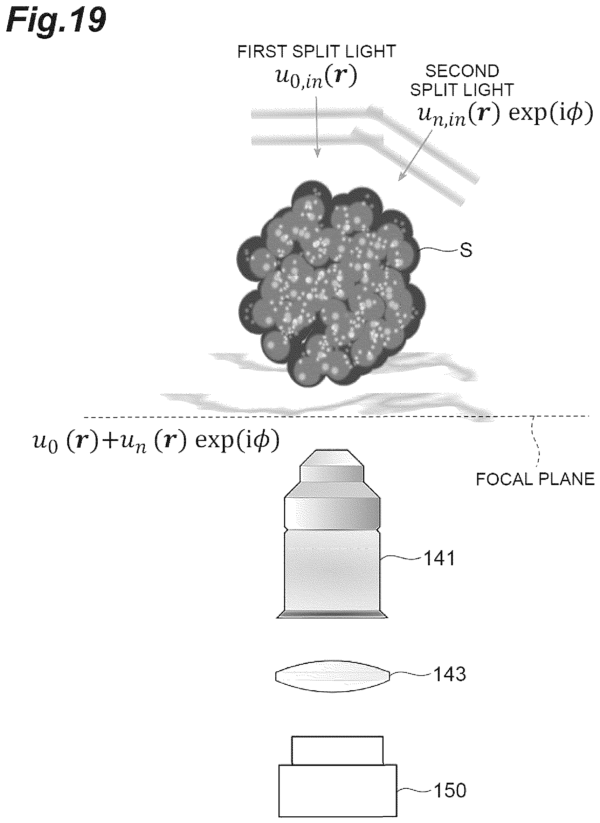

The configuration is not limited to the above configuration, and as described below with reference to FIG. 18 and FIG. 19, both the first split light and the second split light output from the light source and split into two light beams may be received by the imaging unit after passing through the observation object, the interference intensity image generated by the interference between the first split light and the second split light may be imaged for each of the plurality of light irradiation directions of the second split light, and the complex amplitude image may be generated based on the interference intensity image.

FIG. 18 is a diagram illustrating a configuration of an observation apparatus 100. The observation apparatus 100 includes a light source 110, an irradiation unit 131, and an imaging unit 150, and the like. The light source 110 outputs spatially coherent light. The light output from the light source 110 may be temporally coherent light, or may not be temporally coherent light.

The light source 110 may be a laser light source, or may be a light source such as, for example, a super luminescent diode (SLD), a super continuum (SC) light source, or an optical frequency comb light source. Further, spatially incoherent light output from a light emitting diode (LED), a mercury lamp, or the like may pass through a pinhole or the like to increase spatial coherence.

A lens 121 is optically coupled to the light source 110, focuses the light output from the light source 110 on a light input end 122 of an optical fiber 123, and inputs the light to the light input end 122. The optical fiber 123 guides the light input to the light input end 122 to a light output end 124. The light guided by the optical fiber 123 is output as diverging light from the light output end 124. A lens 125 is optically coupled to the light output end 124, inputs and collimates the light output as the diverging light from the light output end 124, and outputs the collimated light to the irradiation unit 131.

The irradiation unit 131 inputs the light output from the light source 110 and passed through the lens 121, the optical fiber 123, and the lens 125, and splits the input light into first split light and second split light. The irradiation unit 131 irradiates the observation object S by combining the first split light and the second split light with each other. The irradiation unit 131 irradiates the observation object S with the first split light along a fixed light irradiation direction, and irradiates the observation object S with the second split light along each of a plurality of light irradiation directions.

The irradiation unit 131 includes a beam splitter 311, a spatial light modulator 313 of a phase modulation type, a polarizer 314, a half wave plate 315, a polarizer 316, a lens 318, and an objective lens 319.

The beam splitter 311 reflects the light arriving through the polarizer 314 and the half wave plate 315 provided between the beam splitter 311 and the lens 125 to the spatial light modulator 313. Further, the beam splitter 311 inputs the light arriving from the spatial light modulator 313, and outputs the light to the polarizer 316.

The spatial light modulator 313, out of linearly polarized light of a first orientation and linearly polarized light of a second orientation which are incident on a modulation plane and are orthogonal to each other, selectively performs phase modulation on the linearly polarized light of the second orientation, without performing phase modulation on the linearly polarized light of the first orientation. The polarizer 314 and the half wave plate 315 set the polarization state of the light such that the light incident on the modulation plane of the spatial light modulator 313 from the beam splitter 311 includes the linearly polarized light components of the first orientation and the second orientation with amounts similar to each other.

The polarizer 316 inputs the light arriving from the spatial light modulator 313 through the beam splitter 311, and enables interference of the linearly polarized light components of the first orientation and the second orientation respectively included in the light. The lens 318 and the objective lens 319 irradiate the observation object S with each of the first split light and the second split light output from the polarizer 316 as a plane wave.

The irradiation unit 131 having the above configuration can set the linearly polarized light of the first orientation, which is not phase modulated by the spatial light modulator 313, as the first split light, and irradiate the observation object S with the first split light along the fixed light irradiation direction. The irradiation unit 131 can set the linearly polarized light of the second orientation, which is phase modulated by the spatial light modulator 313, as the second split light, and irradiate the observation object S with the second split light along each of the plurality of light irradiation directions.

The light irradiation direction of the second split light on the observation object S can be set by a direction and an interval of a phase modulation pattern on the modulation plane of the spatial light modulator 313. Further, the phase difference between the first split light and the second split light can be set by a shift of the phase modulation pattern on the modulation plane of the spatial light modulator 313.

In addition, the phase difference can also be adjusted by a position of the spatial light modulator 313. However, the case in which the phase difference is set by the shift of the phase modulation pattern on the modulation plane of the spatial light modulator 313 is preferable in that there is no mechanical movement of the component.

An objective lens 141 inputs the light (the first split light, the second split light) which irradiates the observation object S by the irradiation unit 131 and passes through the observation object S, and outputs the light to a mirror 142. A lens 143 inputs the light output from the objective lens 141 and reflected by the mirror 142, and inputs the light to an imaging plane of the imaging unit 150.

The imaging unit 150 receives both the first split light and the second split light arriving at the imaging plane from the lens 143, and images the interference intensity image generated by the interference between the first split light and the second split light. The imaging unit 150 images the interference intensity image when the phase difference between the first split light and the second split light is set to each of a plurality of phase differences, for each of the plurality of light irradiation directions of the second split light. By performing the required processing based on the interference intensity images which are imaged by the imaging unit 150, the complex amplitude image and the like can be generated.

The content of the processing of the complex amplitude image generation unit in the case in which the observation apparatus 100 (FIG. 18) is used is as follows. FIG. 19 is a diagram schematically illustrating incidence of the first split light and the second split light on the observation object S and incidence of the first split light and the second split light on the imaging unit 150 after passing through the observation object S in the observation apparatus 100.

The irradiation unit 131 irradiates the observation object S with the first split light and the second split light in an overlapping manner. In this case, the light irradiation direction of the first split light on the observation object S is set to be fixed, the light irradiation direction of the second split light on the observation object S is set to be each of the plurality of light irradiation directions, and the phase difference $\phi$ between the first split light and the second split light is set to each value.

A wavefront of the first split light which is incident on the observation object S is represented as $u_{0,in}(r)$. A wavefront of the second split light which is incident on the observation object S along the n-th light irradiation direction (n = 1 to N) out of the plurality of (N) light irradiation directions of the second split light is represented as $u_{n,in}(r)\exp(i\phi)$. r is a variable representing a position. $\phi$ is the phase difference between the first split light and the second split light. A wavefront of the first split light on the imaging plane of the imaging unit 150 or a focal plane (a plane optically conjugate to the imaging plane) is represented as $u_0(r)$, and a wavefront of the second split light is represented as $u_n(r)\exp(i\phi)$.

The interference intensity image $I_n(r, \phi)$ acquired by imaging by using the imaging unit 150 is represented by a square of an absolute value of a sum of $u_0(r)$ and $u_n(r)\exp(i\phi)$. The interference intensity image $I_n(r, \phi)$ is an interference intensity image acquired by the imaging by using the imaging unit 150 when the phase difference between the first split light and the second split light is set to $\phi$, and in the case in which, for the observation object S, the first split light is incident on the observation object along the fixed light irradiation direction, and the second split light is incident on the observation object along the n-th light irradiation direction.

The focal plane (the plane optically conjugate to the imaging plane) may be a plane set in the observation object S, may be a plane set in the imaging unit 150 side with respect to the observation object S, or may be a plane set in the irradiation unit 131 side with respect to the observation object S.

For each of the plurality of light irradiation directions of the second split light, an interference term $C_n(r) = u_0{}^*(r) \cdot u_n(r)$ is obtained by using the phase shift method based on the interference intensity image acquired by the imaging unit 150 when the phase difference $\phi$ is set to each of the plurality of phase differences. The interference term may be obtained by $u_0(r) \cdot u_n{}^*(r)$. The interference term $C_n(r)$ is obtained for each of the plurality of light irradiation directions of the second split light (that is, for each n (= 1 to N)).

The complex amplitude image of the first split light is generated based on the interference term $C_n(r)$ obtained for each of the plurality of light irradiation directions of the second split light. After a phase slope (a difference of the light incident directions) between the first split light and the second split light is corrected, a coherent sum $C_{sum}(r)$ of the interference term after the correction is obtained, and the phase $\phi_0(r)$ of the complex amplitude $u_0(r)$ of the first split light can be approximately represented by the phase of the coherent sum $C_{sum}(r)$.

An amplitude $A_0(r)$ of the complex amplitude $u_0(r)$ of the first split light can be obtained from an intensity image $|u_0(r)|^2$ imaged by the imaging unit 150 in the case in which the observation object S is not irradiated with the second split light and the observation object S is irradiated only with the first split light. Further, the amplitude $A_0(r)$ of the complex amplitude $u_0(r)$ of the first split light can be approximately represented by a square root of an intensity sum $I_{sum}(r)$ of the interference term $C_n(r)$.

Based on the phase $\phi_0(r)$ and the amplitude $A_0(r)$ of the complex amplitude $u_0(r)$ of the first split light which are obtained as described above, the complex amplitude image $u_0(r)$ of the first split light can be generated. In addition, the complex amplitude image $u_n(r)$ of the second split light of each of the plurality of light irradiation directions can be generated based on the complex amplitude image $u_0(r)$ of the first split light and the interference term $C_n(r)$. The subsequent processing is the same as that already described.

The observation apparatus and the observation method are not limited to the embodiments and configuration examples described above, and various modifications are possible.

The observation apparatus of a first aspect according to the above embodiment includes (1) an interference intensity image acquisition unit for acquiring an interference intensity image of an observation object irradiated with light along each of a plurality of light irradiation directions; (2) a complex amplitude image generation unit for generating a complex amplitude image based on the interference intensity image for each of the plurality of light irradiation directions; (3) a transmission matrix generation unit for generating, based on the complex amplitude image of each of the plurality of light irradiation directions, a transmission matrix $T_{rr}(r_{out}; r_{in})$ which relates a wavefront of light at each position $r_{in}$ on a first plane in a case in which the observation object is not present to a wavefront of light at each position $r_{out}$ on a second plane, which is the same as the first plane, in a case in which the observation object is present; (4) a complex differential interference image generation unit for generating, based on the transmission matrix $T_{rr}(r_{out}; r_{in})$, a complex differential interference image by generating $C(r_{out}; r_{in})$, which is an element-wise product of $T_{rr}(r_{out}; r_{in})$ and $T_{rr}{}^*(r_{out} - \delta r; r_{in} - \delta r)$, weighting $C(r_{out}; r_{in})$ by an amplitude of $C(r_{out}; r_{in})$ for each element, and obtaining a sum of weighted $C(r_{out}; r_{in})$ on the second plane for each position $r_{in}$ on the first plane, or on the first plane for each position $r_{out}$ on the second plane; and (5) a phase differential image generation unit for generating a phase differential image based on the complex differential interference image.

In the observation apparatus of a second aspect, in the configuration of the first aspect, the interference intensity image acquisition unit may acquire the interference intensity image of each of the plurality of light irradiation directions from an imaging unit for imaging the interference intensity image generated by interference between the light which irradiates the observation object along each of the plurality of light irradiation directions and passes through the observation object and reference light.

In the observation apparatus of a third aspect, in the configuration of the second aspect, the interference intensity image acquisition unit may acquire the interference intensity image of each of the plurality of light irradiation directions from the imaging unit for imaging the interference intensity image when the observation object is irradiated with the light along each of the plurality of light irradiation directions in which positions of wavenumber vectors representing the light irradiation directions in a wavenumber space are discretely and periodically distributed; and the complex differential interference image generation unit may generate the complex differential interference image by obtaining the sum of the weighted $C(r_{out}; r_{in})$ for each position $r_{in}$ on the first plane in each of a plurality of regions on the second plane, which are divided based on a periodic distribution of the positions of the wavenumber vectors respectively for the plurality of light irradiation directions in the wavenumber space.

In the observation apparatus of a fourth aspect, in the configuration of the first aspect, the interference intensity image acquisition unit may acquire the interference intensity image generated by interference between the light which irradiates the observation object along each of the plurality of light irradiation directions and passes through the observation object and light which irradiates the observation object along a fixed light irradiation direction and passes through the observation object.

In the observation apparatus of a fifth aspect, in the configuration of any one of the first to fourth aspects, the phase differential image generation unit may generate the complex differential interference image by obtaining the sum of the weighted $C(r_{out}; r_{in})$ on the second plane for each position $r_{in}$ on the first plane for a position relatively far from an imaging unit, and may generate the complex differential interference image by obtaining the sum of the weighted $C(r_{out}; r_{in})$ on the first plane for each position $r_{out}$ on the second plane for a position relatively close to the imaging unit.

In the observation apparatus of a sixth aspect, in the configuration of any one of the first to fifth aspects, the phase differential image generation unit may generate a three-dimensional phase differential image by generating the phase differential image at each position along an optical axis of an imaging unit.

In the observation apparatus of a seventh aspect, in the configuration of any one of the first to sixth aspects, the apparatus may further include a refractive index distribution image generation unit for generating a three-dimensional refractive index distribution image of the observation object based on the three-dimensional phase differential image.

The observation method of a first aspect according to the above embodiment includes (1) an interference intensity image acquisition step of acquiring an interference intensity image of an observation object irradiated with light along each of a plurality of light irradiation directions; (2) a complex amplitude image generation step of generating a complex amplitude image based on the interference intensity image for each of the plurality of light irradiation directions; (3) a transmission matrix generation step of generating, based on the complex amplitude image of each of the plurality of light irradiation directions, a transmission matrix $T_{rr}(r_{out}; r_{in})$ which relates a wavefront of light at each position $r_{in}$ on a first plane in a case in which the observation object is not present to a wavefront of light at each position $r_{out}$ on a second plane, which is the same as the first plane, in a case in which the observation object is present; (4) a complex differential interference image generation step of generating, based on the transmission matrix $T_{rr}(r_{out}; r_{in})$, a complex differential interference image by generating $C(r_{out}; r_{in})$, which is an element-wise product of $T_{rr}(r_{out}; r_{in})$ and $T_{rr}^*(r_{out} - \delta r; r_{in} - \delta r)$, weighting $C(r_{out}; r_{in})$ by an amplitude of $C(r_{out}; r_{in})$ for each element, and obtaining a sum of weighted $C(r_{out}; r_{in})$ on the second plane for each position $r_{in}$ on the first plane, or on the first plane for each position $r_{out}$ on the second plane; and (5) a phase differential image generation step of generating a phase differential image based on the complex differential interference image.

In the observation method of a second aspect, in the configuration of the first aspect, in the interference intensity image acquisition step, the interference intensity image of each of the plurality of light irradiation directions may be acquired from an imaging unit for imaging the interference intensity image generated by interference between the light which irradiates the observation object along each of the plurality of light irradiation directions and passes through the observation object and reference light.

In the observation method of a third aspect, in the configuration of the second aspect, in the interference intensity image acquisition step, the interference intensity image of each of the plurality of light irradiation directions may be acquired from the imaging unit for imaging the interference intensity image when the observation object is irradiated with the light along each of the plurality of light irradiation directions in which positions of wavenumber vectors representing the light irradiation directions in a wavenumber space are discretely and periodically distributed; and in the complex differential interference image generation step, the complex differential interference image may be generated by obtaining the sum of the weighted $C(r_{out}; r_{in})$ for each position $r_{in}$ on the first plane in each of a plurality of regions on the second plane, which are divided based on a periodic distribution of the positions of the wavenumber vectors respectively for the plurality of light irradiation directions in the wavenumber space.

In the observation method of a fourth aspect, in the configuration of the first aspect, in the interference intensity image acquisition step, the interference intensity image generated by interference between the light which irradiates the observation object along each of the plurality of light irradiation directions and passes through the observation object and light which irradiates the observation object along a fixed light irradiation direction and passes through the observation object may be acquired.

In the observation method of a fifth aspect, in the configuration of any one of the first to fourth aspects, in the phase differential image generation step, the complex differential interference image may be generated by obtaining the sum of the weighted $C(r_{out}; r_{in})$ on the second plane for each position $r_{in}$ on the first plane for a position relatively far from an imaging unit, and the complex differential interference image may be generated by obtaining the sum of the weighted $C(r_{out}; r_{in})$ on the first plane for each position $r_{out}$ on the second plane for a position relatively close to the imaging unit.

In the observation method of a sixth aspect, in the configuration of any one of the first to fifth aspects, in the phase differential image generation step, a three-dimensional phase differential image may be generated by generating the phase differential image at each position along an optical axis of an imaging unit.

In the observation method of a seventh aspect, in the configuration of any one of the first to sixth aspects, the method may further include a refractive index distribution image generation step of generating a three-dimensional refractive index distribution image of the observation object based on the three-dimensional phase differential image.

The program according to the above embodiment is a program for causing a computer to execute the respective steps of the observation method of the above configuration.

The recording medium according to the above embodiment is a computer readable recording medium storing the program of the above configuration.

**Industrial Applicability**

The embodiments can be used as an observation apparatus and an observation method capable of reducing influence of multiple scattered light and observing an observation object without staining the observation object even in the case in which the observation object is a multiple scattering object.

Reference Signs List

1A - 1C - observation apparatus, 2 - recording medium, 11 - light source, 12 - lens, 13 - light input end, 14 - optical fiber, 15 - fiber coupler, 16, 17 - optical fiber, 18, 19 - light output end, 21 - lens, 22 - mirror, 23 - lens, 24 - condenser lens, 25 - objective lens, 31 - lens, 32 - mirror, 33 - drive unit, 34 - lens, 41 - beam splitter, 42 - lens, 43 - imaging unit, 50 - analysis unit, 51 - interference intensity image acquisition unit, 52 - complex amplitude image generation unit, 53 - transmission matrix generation unit, 54 - complex differential interference image generation unit, 55 - phase differential image generation unit, 56 - refractive index distribution image generation unit, 57 - display unit, 58 - storage unit, 100 - observation apparatus, 110 - light source, 131 - irradiation unit, 150 - imaging unit.

**Claims**

1.  An observation apparatus comprising:

    an interference intensity image acquisition unit for acquiring an interference intensity image of an observation object irradiated with light along each of a plurality of light irradiation directions;
    a complex amplitude image generation unit for generating a complex amplitude image based on the interference intensity image for each of the plurality of light irradiation directions;
    a transmission matrix generation unit for generating, based on the complex amplitude image of each of the plurality of light irradiation directions, a transmission matrix $T_{rr}(r_{out}; r_{in})$ which relates a wavefront of light at each position $r_{in}$ on a first plane in a case in which the observation object is not present to a wavefront of light at each position $r_{out}$ on a second plane, which is the same as the first plane, in a case in which the observation object is present;
    a complex differential interference image generation unit for generating, based on the transmission matrix $T_{rr}(r_{out}; r_{in})$, a complex differential interference image by generating $C(r_{out}; r_{in})$, which is an element-wise product of $T_{rr}(r_{out}; r_{in})$ and $T_{rr}^*(r_{out} - \delta_r; r_{in} - \delta r)$, weighting $C(r_{out}; r_{in})$ by an amplitude of $C(r_{out}; r_{in})$ for each element, and obtaining a sum of weighted $C(r_{out}; r_{in})$ on the second plane for each position $r_{in}$ on the first plane, or on the first plane for each position $r_{out}$ on the second plane; and

a phase differential image generation unit for generating a phase differential image based on the complex differential interference image.

2. The observation apparatus according to Claim 1, wherein the interference intensity image acquisition unit acquires the interference intensity image of each of the plurality of light irradiation directions from an imaging unit for imaging the interference intensity image generated by interference between the light which irradiates the observation object along each of the plurality of light irradiation directions and passes through the observation object and reference light.

3. The observation apparatus according to Claim 2, wherein the interference intensity image acquisition unit acquires the interference intensity image of each of the plurality of light irradiation directions from the imaging unit for imaging the interference intensity image when the observation object is irradiated with the light along each of the plurality of light irradiation directions in which positions of wavenumber vectors representing the light irradiation directions in a wavenumber space are discretely and periodically distributed; and
the complex differential interference image generation unit generates the complex differential interference image by obtaining the sum of the weighted $C(r_{out}; r_{in})$ for each position $r_{in}$ on the first plane in each of a plurality of regions on the second plane, which are divided based on a periodic distribution of the positions of the wavenumber vectors respectively for the plurality of light irradiation directions in the wavenumber space.

4. The observation apparatus according to Claim 1, wherein the interference intensity image acquisition unit acquires the interference intensity image generated by interference between the light which irradiates the observation object along each of the plurality of light irradiation directions and passes through the observation object and light which irradiates the observation object along a fixed light irradiation direction and passes through the observation object.

5. The observation apparatus according to any one of Claims 1 to 4, wherein the phase differential image generation unit

generates the complex differential interference image by obtaining the sum of the weighted $C(r_{out}; r_{in})$ on the second plane for each position $r_{in}$ on the first plane for a position relatively far from an imaging unit, and generates the complex differential interference image by obtaining the sum of the weighted $C(r_{out}; r_{in})$ on the first plane for each position $r_{out}$ on the second plane for a position relatively close to the imaging unit.

6. The observation apparatus according to any one of Claims 1 to 5, wherein the phase differential image generation unit generates a three-dimensional phase differential image by generating the phase differential image at each position along an optical axis of an imaging unit.

7. The observation apparatus according to Claim 6, further comprising a refractive index distribution image generation unit for generating a three-dimensional refractive index distribution image of the observation object based on the three-dimensional phase differential image.

8. An observation method comprising:

an interference intensity image acquisition step of acquiring an interference intensity image of an observation object irradiated with light along each of a plurality of light irradiation directions;
a complex amplitude image generation step of generating a complex amplitude image based on the interference intensity image for each of the plurality of light irradiation directions;
a transmission matrix generation step of generating, based on the complex amplitude image of each of the plurality of light irradiation directions, a transmission matrix $T_{rr}(r_{out}; r_{in})$ which relates a wavefront of light at each position $r_{in}$ on a first plane in a case in which the observation object is not present to a wavefront of light at each position $r_{out}$ on a second plane, which is the same as the first plane, in a case in which the observation object is present;
a complex differential interference image generation step of generating, based on the transmission matrix $T_{rr}(r_{out}; r_{in})$, a complex differential interference image by generating $C(r_{out}; r_{in})$, which is an element-wise product of $T_{rr}(r_{out}; r_{in})$ and $T_{rr}^*(r_{out} - \delta r; r_{in} - \delta r)$, weighting $C(r_{out}; r_{in})$ by an amplitude of $C(r_{out}; r_{in})$ for each element, and obtaining a sum of weighted $C(r_{out}; r_{in})$ on the second plane for each position $r_{in}$ on the first plane, or on the first plane for each position $r_{out}$ on the second plane; and
a phase differential image generation step of generating a phase differential image based on the complex differential interference image.

9. The observation method according to Claim 8, wherein in the interference intensity image acquisition step, the

**EP 4 632 354 A1**

interference intensity image of each of the plurality of light irradiation directions is acquired from an imaging unit for imaging the interference intensity image generated by interference between the light which irradiates the observation object along each of the plurality of light irradiation directions and passes through the observation object and reference light.

10. The observation method according to Claim 9, wherein in the interference intensity image acquisition step, the interference intensity image of each of the plurality of light irradiation directions is acquired from the imaging unit for imaging the interference intensity image when the observation object is irradiated with the light along each of the plurality of light irradiation directions in which positions of wavenumber vectors representing the light irradiation directions in a wavenumber space are discretely and periodically distributed; and
in the complex differential interference image generation step, the complex differential interference image is generated by obtaining the sum of the weighted $C(r_{out}; r_{in})$ for each position $r_{in}$ on the first plane in each of a plurality of regions on the second plane, which are divided based on a periodic distribution of the positions of the wavenumber vectors respectively for the plurality of light irradiation directions in the wavenumber space.

11. The observation method according to Claim 8, wherein in the interference intensity image acquisition step, the interference intensity image generated by interference between the light which irradiates the observation object along each of the plurality of light irradiation directions and passes through the observation object and light which irradiates the observation object along a fixed light irradiation direction and passes through the observation object is acquired.

12. The observation method according to any one of Claims 8 to 11, wherein in the phase differential image generation step,

the complex differential interference image is generated by obtaining the sum of the weighted $C(r_{out}; r_{in})$ on the second plane for each position $r_{in}$ on the first plane for a position relatively far from an imaging unit, and
the complex differential interference image is generated by obtaining the sum of the weighted $C(r_{out}; r_{in})$ on the first plane for each position $r_{out}$ on the second plane for a position relatively close to the imaging unit.

13. The observation method according to any one of Claims 8 to 12, wherein in the phase differential image generation step, a three-dimensional phase differential image is generated by generating the phase differential image at each position along an optical axis of an imaging unit.

14. The observation method according to Claim 13, further comprising a refractive index distribution image generation step of generating a three-dimensional refractive index distribution image of the observation object based on the three-dimensional phase differential image.

15. A program for causing a computer to execute the respective steps of the observation method according to any one of Claims 8 to 14.

16. A computer readable recording medium storing the program according to Claim 15.

*Fig.1*

EP 4 632 354 A1

*Fig.2*

EP 4 632 354 A1

Fig.3

## Fig.4

```
                                          ╱50
┌───────────────────────────────────────────────┐
│              ANALYSIS UNIT                       │
│                                                  │
│  ┌────────────────────────────────────┐         │
│  │    INTERFERENCE INTENSITY          │ ~51     │
│  │    IMAGE ACQUISITION UNIT          │         │
│  └────────────────────────────────────┘         │
│                                                  │
│  ┌────────────────────────────────────┐         │
│  │    COMPLEX AMPLITUDE               │ ~52     │
│  │    IMAGE GENERATION UNIT           │         │
│  └────────────────────────────────────┘         │
│                                                  │
│  ┌────────────────────────────────────┐         │
│  │    TRANSMISSION MATRIX             │ ~53     │
│  │    GENERATION UNIT                 │         │
│  └────────────────────────────────────┘         │
│                                                  │
│  ┌────────────────────────────────────┐         │
│  │  COMPLEX DIFFERENTIAL INTERFERENCE │ ~54     │
│  │    IMAGE GENERATION UNIT           │         │
│  └────────────────────────────────────┘         │
│                                                  │
│  ┌────────────────────────────────────┐         │
│  │    PHASE DIFFERENTIAL              │ ~55     │
│  │    IMAGE GENERATION UNIT           │         │
│  └────────────────────────────────────┘         │
│                                                  │
│  ┌────────────────────────────────────┐         │
│  │  REFRACTIVE INDEX DISTRIBUTION     │ ~56     │
│  │    IMAGE GENERATION UNIT           │         │
│  └────────────────────────────────────┘         │
│                                                  │
│  ┌────────────────────────────────────┐         │
│  │         DISPLAY UNIT               │ ~57     │
│  └────────────────────────────────────┘         │
│         ╱2                                       │
┌──────────────┐  ┌────────────────────────────────────┐  │
│  RECORDING   │──│         STORAGE UNIT               │ ~58
│  MEDIUM      │  └────────────────────────────────────┘  │
└──────────────┘                                   │
└───────────────────────────────────────────────┘
```

*Fig.5*

| | |
|---|---|
| INTERFERENCE INTENSITY IMAGE ACQUISITION | ~S51 |
| COMPLEX AMPLITUDE IMAGE GENERATION | ~S52 |
| TRANSMISSION MATRIX GENERATION | ~S53 |
| COMPLEX DIFFERENTIAL INTERFERENCE IMAGE GENERATION | ~S54 |
| PHASE DIFFERENTIAL IMAGE GENERATION | ~S55 |

## Fig.6

(a)

(b)

(c)

(d)

(e)

EP 4 632 354 A1

# Fig.7

LIGHT IRRADIATION $\qquad$ $U_{in}(k_{in})$

OBSERVATION OBJECT $\quad$ $T(r_{out}, k_{in})$

$u_{out}(r_{out})$

IMAGING

IMAGING UNIT

## Fig.8

```
┌─────────────────────────────┐
│   INTERFERENCE INTENSITY    │ ── S51
│      IMAGE ACQUISITION      │
└─────────────────────────────┘
              │
┌─────────────────────────────┐
│      COMPLEX AMPLITUDE       │ ── S52
│      IMAGE GENERATION        │
└─────────────────────────────┘
              │
              ▼
┌─────────────────────────────┐
│      FREE PROPAGATION        │ ── S57
│       TO POSITION z          │
└─────────────────────────────┘
              │
┌─────────────────────────────┐
│        TRANSMISSION          │ ── S53
│      MATRIX GENERATION       │
└─────────────────────────────┘
              │
┌─────────────────────────────┐
│    COMPLEX DIFFERENTIAL      │ ── S54
│ INTERFERENCE IMAGE GENERATION│
└─────────────────────────────┘
              │
┌─────────────────────────────┐
│        $z = z + \delta z$        │ ── S58
└─────────────────────────────┘
              │
              ▼
         ◇ S59
YES ─── $z < z_{end}$
              │ NO
              ▼
┌─────────────────────────────┐
│      PHASE DIFFERENTIAL       │ ── S55
│      IMAGE GENERATION         │
└─────────────────────────────┘
              │
┌─────────────────────────────┐
│ REFRACTIVE INDEX DISTRIBUTION │ ── S56
│      IMAGE GENERATION         │
└─────────────────────────────┘
```

## Fig.9

(a)

(b)

## Fig.10

(a)

(b)

*Fig.11*

$D(r_{in})$

$D(r_{in}-r_{p1})$

$D(r_{in}-r_{p2})$

$D(r_{in}-r_{p3})$

300
200
100
0
-100

Fig.12

Fig.13

Fig.14

*Fig.15*

SIMULATED CELL MASS

IMAGING UNIT

LIGHT IRRADIATION

Fig.16

Fig.17

Fig.18

# Fig.19

FIRST SPLIT LIGHT
$$u_{0,in}(\boldsymbol{r})$$

SECOND
SPLIT LIGHT
$$u_{n,in}(\boldsymbol{r})\exp(i\phi)$$

S

$$u_0(\boldsymbol{r})+u_n(\boldsymbol{r})\exp(i\phi)$$

FOCAL PLANE

141

143

150

## INTERNATIONAL SEARCH REPORT

| International application No. |
|---|
| **PCT/JP2023/044281** |

### A. CLASSIFICATION OF SUBJECT MATTER

*G01N 21/45*(2006.01)i; *G02B 21/00*(2006.01)i; *G02B 21/14*(2006.01)i
FI:   G01N21/45 Z; G02B21/00; G02B21/14

According to International Patent Classification (IPC) or to both national classification and IPC

### B. FIELDS SEARCHED

Minimum documentation searched (classification system followed by classification symbols)

G01N21/00-21/61; G02B21/00-21/36; C12M1/00-1/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2022/054305 A1 (HAMAMATSU PHOTONICS KK) 17 March 2022 (2022-03-17) | 1-16 |
| A | JP 2017-219826 A (KOREA ADVANCED INSTITUTE OF SCIENCE AND TECHNOLOGY) 14 December 2017 (2017-12-14) | 1-16 |
| A | US 2021/0310787 A1 (CENTRE NATIONAL DE LA RECHERCHE SCIENTIFIQUE) 07 October 2021 (2021-10-07) | 1-16 |
| P, A | WO 2023/095378 A1 (HAMAMATSU PHOTONICS KK) 01 June 2023 (2023-06-01) | 1-16 |
| P, A | WO 2023/095442 A1 (HAMAMATSU PHOTONICS KK) 01 June 2023 (2023-06-01) | 1-16 |
| P, A | WO 2023/095441 A1 (HAMAMATSU PHOTONICS KK) 01 June 2023 (2023-06-01) | 1-16 |
| P, A | WO 2023/095440 A1 (HAMAMATSU PHOTONICS KK) 01 June 2023 (2023-06-01) | 1-16 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 January 2024** | **30 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2023/044281**

| Patent document cited in search report | | | Publication date (day/month/year) | Patent family member(s) | | | Publication date (day/month/year) |
|---|---|---|---|---|---|---|---|
| WO | 2022/054305 | A1 | 17 March 2022 | US | 2023/32429 | A1 | |
| | | | | EP | 4194923 | A1 | |
| | | | | CN | 116194818 | A | |
| | | | | KR | 10-2023-0065276 | A | |
| JP | 2017-219826 | A | 14 December 2017 | US | 2020/0081236 | A1 | |
| | | | | WO | 2017/213464 | A1 | |
| | | | | EP | 3255414 | A1 | |
| | | | | KR | 10-2017-0140459 | A | |
| | | | | CN | 107490562 | A | |
| | | | | CA | 2938995 | A1 | |
| US | 2021/0310787 | A1 | 07 October 2021 | WO | 2020/016249 | A2 | |
| | | | | EP | 3824269 | A2 | |
| | | | | FR | 3084172 | A1 | |
| | | | | CN | 112740092 | A | |
| | | | | KR | 10-2021-0044208 | A | |
| WO | 2023/095378 | A1 | 01 June 2023 | (Family: none) | | | |
| WO | 2023/095442 | A1 | 01 June 2023 | (Family: none) | | | |
| WO | 2023/095441 | A1 | 01 June 2023 | (Family: none) | | | |
| WO | 2023/095440 | A1 | 01 June 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017219826 A

**Non-patent literature cited in the description**

- **PRITAM PAI et al.** Optical transmission matrix measurement sampled on a dense hexagonal lattice. *OSA Continuum*, 2020, vol. 3 (3), 637-648
- **DUYGU AKBULUT et al.** Optical transmission matrix as a probe of the photonic strength. *PHYSICAL REVIEW A*, 2016, vol. 94, 043817, 043817-1, 043817-8
- **ELBERT G. VAN PUTTEN et al.** The information age in optics: Measuring the transmission matrix. *Physics*, 2010, vol. 3, 22, https://physics.aps.org/articles/v3/22?referer=apshome